# EUROPEAN PATENT APPLICATION

(11) **EP 4 257 326 A1**
(43) Date of publication of application: **11.10.2023**
(21) Application number: 22167337.9
(22) Date of filing: 08.04.2022
(51) Int. Cl.: B29C 44/60, B29C 44/28, B29C 44/46, B29C 44/56

(54) **OPTICAL DETERMINATION OF A CONTROL SIGNAL IN RESPONSE TO DETECTION OF MACROSCOPIC POLYURETHANE FOAM DEFECTS**

(71) Applicant: Evonik Operations GmbH, 45128 Essen (DE)
(72) Inventor: KIWITT, Jörn, 45239 Essen (DE); LANDERS, Rüdiger, 37520 Osterode (DE); TOMUSCHAT, Philipp, 45136 Essen (DE)
(74) Representative: Evonik Patent Association

(57) **Abstract**

Disclosed herein is a method of producing a polyurethane foam block (137') using a foam production machine (100) configured for producing polyurethane foam as a slabstock (137) using a continuous slabstock process defined by at least one process parameter, such as a raw material output factor or a conveyor speed. The foam production machine includes a mixing head (102) configured to mix precursor reagents for forming a reactive mixture (136), and a conveyor (106) configured to receive the reactive mixture. The method comprises: mixing (800) the precursor reagents in the mixing head to provide the reactive mixture; dispensing (802) the reactive mixture to initiate foaming of the reactive mixture; receiving (804) the reactive mixture by the conveyor; cutting (806) the polyurethane foam block from an end portion of the slabstock to produce a cut surface (724); acquiring (808) a digital image (742) of the cut surface using an imaging system (706); inputting (810) the digital image into a pattern recognition module (762), the pattern recognition module being configured to recognize at least one pattern being indicative of at least one macroscopic polyurethane foam defect, and being configured to output an identification (766) of a presence of the at least one macroscopic polyurethane foam defect in response to recognizing the respective pattern in the digital image; and inputting (812) the identification of the presence of the at least one macroscopic polyurethane foam defect into a control module (764), the control module being configured to process the inputted identification in order to output a control signal for changing the least one process parameter of the continuous slabstock process.

## Description

### Field of the invention

The invention relates to the production and manufacture of Polyurethane foam, in particular the determination of a control signal optically.

### Background and related art

PU flexible slabstock foams are used worldwide for the production of upholstered furniture and mattresses, for example. In the manufacturing process, the usually liquid components are pumped into a mixing head, mixed and continuously dosed onto a conveyor belt. There the reaction mixture begins to foam up, i.e., to expand. The driving force for this is the formation of gaseous reaction products (e.g., CO2) as well as the evaporation of physical blowing agents. To prevent the reaction mixture from flowing away to the side, the conveyor belt is limited laterally by side walls. In slabstock technology, the foam can therefore rise freely in at least one direction (e.g., upwards). The pressure in the gas bubbles of the rising foam is usually roughly equivalent to atmospheric pressure.

The reaction mixture expands vertically during the simultaneous horizontal movement on the conveyor belt and forms long blocks ("slabstock foam") in the continuous process, which are then cut according to certain lengths and transferred to the reaction store. During the ascent, the progressive cross-linking of the reactive components causes the material to solidify and therefore the firm but elastic flexible polyurethane foam is finally obtained. Shortly before the solidification of the material, the cell opening still takes place in connection with the loss of a small part of the cell gases and a slight sagging back of the just not yet solid foam block.

International patent publication WO 2021/071808 A1 discloses producing polyurethane foam, and then imaging the polyurethane foam at or just after the outlets while the foam is being produced, above the surface of the foam at an angle greater than zero to less than 90 degrees relative to the surface of the foam, or after the foam is cut but before it has cooled to room temperature, using an infrared or an optical imaging device, to capture an image of the polyurethane foam, and determining, based on the captured image, if a defect that requires correction exists in the polyurethane foam; and optionally, in response to determining that a defect requiring correction exists, modifying a process parameter in producing the polyurethane foam.

### Summary

The invention provides for a method of producing a polyurethane foam block, a foam production machine, a system, and a computer program in the independent claims. Embodiments are given in the dependent claims.

The structure of a polyurethane foam may be sensitive to the process parameters used during manufacturing. If the process parameters are incorrectly set there may be macroscopic defects in the structure of the polyurethane foam. A macroscopic polyurethane foam defect as used herein encompasses a defect in the polyurethane foam that has a scale that is several times larger than the average foam cell size. During the manufacture of the polyurethane foam bubbles form and after hardening or curing form foam cells. A macroscopic polyurethane foam defect is therefore a defect which has a scale, for example, greater than 3, 4, or 5 times the average foam cell size.

Examples of polyurethane foam defects include a scorched foam defect, a pinhole, an uneven foam geometry, a domed top, an ear formation, a split, and a blowhole. A scorched foam defect is a discoloration of the polyurethane foam which indicates damage due to overheating during manufacture. A pinhole is a region within the polyurethane foam block which is devoid of foam cells. Uneven foam geometry include defects where the shape of the polyurethane foam block is outside of manufacturing specifications. A domed top is where the sides of the polyurethane foam block have expanded less that the middle of the top of the polyurethane foam block. An ear formation is where the sides of the polyurethane foam block have expanded more the middle of the top of the polyurethane foam block. A split is a split in a surface of the polyurethan foam block that extends into the interior of the block. A blowhole is a pinhole that has a vent to a surface of the polyurethane foam block. A densification zone is a region where the foam is compresses while expanding. A densification zone could for example be caused by wrong fall plate settings. Densification zones are often time found in the bottom region of the slabstock.

Embodiments may provide a means of correcting the process parameters during the manufacture of a polyurethane foam block. After a foam block is cut from a slabstock the cut surface, an imaging system is used to image the cut surface. The cut surface on the cut block or the slabstock may be used. This is because when the slabstock is cut, the freshly cut surface on the slabstock and the foam block are mirror images of each other. They are essentially equivalent surfaces. After the digital image has been acquired, two modules are used. A pattern recognition module is used to recognize the presence of the at least one macroscopic polyurethane foam defect. This pattern recognition module provides this identification to a control module. The control module then provides a control signal configured to modify at least one process parameter in response to receiving the identification of the at least one macroscopic polyurethane foam defect.

The control signal could be used in a variety of ways. It could be used in a control system. The control signal could also be used by an assistance system that that shows the defect and proposes adaption of process parameters to an operator of the machine, without directly controlling the outcome.

In one aspect the invention provides for a method of producing a polyurethane foam block using a foam production machine configured for producing polyurethane foam as a slabstock using a continuous slabstock process defined by at least one process parameter. This one process parameter may be for example, parameters which adjust the foam production machine or related to chemical process parameters or parameters which affect a chemical process. For example, the at least one process parameter may be a raw material output factor or a conveyor speed. The raw material output factor is also referred to as the output factor herein. The foam production machine includes a mixing head that is configured to mix precursor reagents for forming a reactive mixture. The foam production machine further comprises a conveyor that is configured to receive the reactive mixture. The foam production machine includes a mixing head that is configured to mix precursor reagents for forming a reactive mixture. The foam production machine further includes a conveyor that is configured to receive the reactive mixture.

The method comprises mixing the precursor reagents in the mixing head to provide the reactive mixture. The method further comprises dispensing the reactive mixture to initiate foaming of the reactive mixture. The method further comprises receiving the reactive mixture by the conveyor. The method further comprises cutting the polyurethane foam block from an end portion of the slabstock to produce a cut surface. The cut surface may for example be on the polyurethane foam block that was just cut or it may be on the slabstock from which the block was cut. The structure of both of these surfaces is very similar and examining both of these surfaces will result in similar results.

The method further comprises acquiring a digital image of the cut surface using an imaging system. The imaging system may for example be an optical camera that images the cut surface. The cut surface that is imaged by the imaging system may be different in several different examples. In one example the entire surface of the block is imaged. In other examples, a portion of the cut surface is imaged. When looking for macroscopic defects it may be beneficial to image the entire cut surface so that the possibility of observing all macroscopic defects is increased.

The method further comprises inputting the digital image into a pattern recognition module. The pattern recognition module is configured to recognize at least one pattern being indicative of at least one macroscopic polyurethane foam defect. The pattern recognition module is configured to output an identification of a presence of at least one macroscopic polyurethane foam defect in response to recognizing the respective pattern the digital image.

The pattern recognition module may be implemented in a variety of ways. In one example the pattern recognition module is implemented as an algorithm. For example, the pattern recognition module may perform a form of edge detection in the image and then map these edges onto known foam defects. Another approach is to train a neural network to recognize various foam defect patterns in an image.

The method further comprises inputting the identification of the presence of the at least one macroscopic polyurethane foam defect into a control module. The control module is configured to process the inputted identification in order to output a control signal for changing the at least one process parameter of the continuous slabstock process. For example, the pattern recognition module may recognize a particular macroscopic polyurethane foam defect. The control module receives this identification and then outputs a control signal for changing the at least one process parameter of the continuous slabstock process.

This may also operate in several different ways. In one case the presence of the at least one macroscopic foam defect causes the control module to react and send a control signal, which may be used to correct the problem that caused the macroscopic polyurethane foam defect. In this case this could be instructions to change a particular process parameter by a certain value. This for example, could be forwarded to another controller that controls the foam production machine. In another example it could be a message that is forwarded to an operator to suggest an action to be performed by the operator.

In another example, the controller controls the foam production machine and also receives the current process parameters. In this way the control module is able to output the values that various machine parameters should be set to directly instead of a relative change.

In another embodiment the process parameter is configuration data which is descriptive of a configuration of the foam block production machine. This could for example be data which is related to various speeds and temperatures and other mechanical processes.

In another embodiment the at least one process parameter comprises a mixing trough size.

In another embodiment the at least one process parameter comprises a fall plate orientation parameter.

In another embodiment the at least one process parameter comprises a flat top plate or flat top position.

In another embodiment the at least one process parameter comprises a belt speed.

In another embodiment the at least one process parameter comprises a conveyor speed.

In another embodiment the at least one process parameter comprises a creaming position.

In another embodiment the at least one process parameter comprises a blow off position.

In another embodiment the at least one process parameter comprises a chemical process parameter that is descriptive of the continuous slabstock process.

In another embodiment the at least one process parameter comprises a formulation of the precursor reagents.

In another embodiment the at least one process parameter comprises mixture parameters of the reactive mixture.

In another embodiment the at least one process parameter comprises a type of chemical compounds used.

In another embodiment the at least one process parameter comprises a foam catalyst concentration in the foam mixture.

In another embodiment the at least one process parameter comprises a temperature of the foam mixture.

In another embodiment the method is performed repeatedly. This means that the various steps are performed multiple times. The steps of cutting the surface of the foam block as it is manufactured, acquiring the digital image and then obtaining the control signal forms essentially a closed control loop. This embodiment may be beneficial because it may provide for a highly effective means of more precisely controlling the foam production machine. This may result in less waste material and therefore reduce costs in the production of foam.

In another embodiment the method further comprises signaling the control signal in response to inputting the digital image into the trained machine learning module. In other words, the digital image is input into the trained machine learning module and in response the trained machine learning module provides the control signal. This is then provided or signaled. It could for example be used in a variety of different ways. The control signal may be provided to a user; used to control the foam production machine in a closed control loop, or it may also be appended or stored with metadata is data that is descriptive of the particular foam block.

In another embodiment the pattern recognition module and the control module are accessible via a network connection. Inputting the digital image into the pattern recognition module comprises providing the digital image to the pattern recognition module via the network connection. The control signal is received via the network connection. This embodiment may be beneficial because it enables having the pattern recognition module and the control module at a central location. This may provide the economic benefit of not needing to provide as many pattern recognition modules and control modules as well as enabling the use of the same system at multiple manufacturing locations.

In another embodiment the control module is further configured to receive the configuration data descriptive of a configuration of the foam production machine as input.

In another embodiment the control module is further configured to receive the chemical process parameters descriptive of the continuous slabstock process. This may for example include the chemicals or reagents that are mixed to form the slabstock process as well as flow and/or amounts of these materials used.

In another embodiment the control module is further configured to receive a formulation of the precursor reagents. The process parameter may include for example modifying or adjusting the formulation of the various precursor reagents.

In another embodiment the control module is further configured to receive the mixture of the parameters of the reactive mixture. In addition to the formulation of the precursor reagents the mixture parameters may include various mechanical processes such as the mixture speed or the addition of other things such as an airflow into the reactive mixture as it is being mixed.

In another embodiment the control module is further configured to receive measured sensor data. These embodiments may be beneficial because it may enable the module to function as a control module for controlling the foam production machine directly.

In another embodiment at least one process parameter comprises mixture parameters of the reactive mixture. In addition to the formulation of the precursor reagents the mixture parameters may include various mechanical processes such as the mixture speed or the addition of other things such as an airflow into the reactive mixture as it is being mixed.

In another embodiment at least one process parameter further comprises a conveyor speed. This is the rate at which the conveyor may move.

In another embodiment at least one process parameter comprises a fall plate setting for adjustment of the various positions of the fall plates.

In another embodiment the method further comprises changing the at least one process parameter of the continuous slabstock process using the control signal. This could be advantageous because then the system forms a closed loop control system.

In another embodiment the pattern recognition module is configured for identifying the presence of at least one macroscopic polyurethane foam defect in the digital image at least partially by identifying a set of edges in the digital image using an edge detection module and by detecting the presence of the at least one macroscopic polyurethane foam defect by mapping the set of edges to a predetermined database of macroscopic defects. The Euclidian distance transformation could be used for this. The means for detecting the edges may include such algorithms as the watershed edge detection, or the canny edge detection. Various linear or non-linear transformations can be used to transform the set of edges to a predetermined database of macroscopic defects to determine if the set of edges contain or describe a macroscopic polyurethane foam defect.

In general the edges in the digital image can be determined using a variety of different image processing techniques. The reference book Gonzales and Woods, Digital Image Processing 3rd edition, Prentice Hall International, 2007 (hereafter Gonzales and Woods) discuss in chapter 10 (pp. 711 to 816) a variety of image segmentation techniques such as edge detection, the use of morphological watershed algorithms, and region-based segmentation. All of these techniques may be used to identify edges or regions in the digital image.

Once the regions or edges have been identified, defects within the image can be assigned a feature vector. Chapter 11 (pp. 817 to 882) of Gonzales and Woods describes the algorithmic classification of image features. For example, a shape number or skeleton can be determined for each macroscopic polyurethane foam defect. Once a representation has been determined for a macroscopic polyurethane foam defect the representation can be compared to a predetermined database of macroscopic defects to identify the particular defect. Chapter 12 of Gonzales and Woods (pp. 883 to 931) describe a number of object recognition techniques. For example if the macroscopic polyurethane foam defect and the predetermined database of macroscopic use a vector to store representations, then the defect in the predetermined database which most closely matches the polyurethane foam defect can be determined by calculating Euclidian distances and choosing the closest.

In another embodiment the pattern recognition module comprises an object detection neural network configured for outputting the identification of the at least one macroscopic polyurethane foam defect in response to receiving the digital image as input. In this embodiment one can take training data with images that contain macroscopic polyurethane foam defects and no polyurethane foam defects and label any macroscopic polyurethane foam defects that are in those images. The labeled images can be used to train a neural network using deep learning. This is a very similar process to object identification and recognition in optical images. The various types of neural networks which could be used to identify or segment images may be used for this task. For example, the U-net, a LinkNet, SegNet, Fast-FCN, Gated-SCNN, DeepLab, Mask R-CNN or other neural network architectures commonly used for segmentation. These neural networks could be trained by using images of polyurethane foam defects that have accompanying data that labels or marks the defects. The images may be input into the neural network during training and the accompanying data may be used as ground truth data. An alternative way of training the neural networks would be to train them to provide a classification to an image containing a defect. In this case the labeling effort is lower.

In another embodiment the pattern recognition module further comprises a pattern recognition algorithm, wherein the pattern recognition module is configured for outputting the identification of the at least one macroscopic polyurethane foam defect by combining results of the pattern recognition algorithm and the object detection neural network. In this embodiment the classical approach of using edge detection or other algorithm may be combined with the results from a neural network. And, for example, a weighting or voting process can be used to decide between the two or the results can be merely combined so that a macroscopic defect is not missed by one or the other algorithm.

In another embodiment the control module comprises an algorithmic decision module configured for outputting the control signal in response to receiving the identification of the presence of the at least one macroscopic polyurethane foam defect. In this embodiment the algorithm can be programmed with known actions or responses to a particular type of macroscopic polyurethane foam defect or multiple types of macroscopic polyurethane foam defects if multiple defects are detected.

In another embodiment the algorithmic decision module is a rule-based software module or a lookup table.

In another embodiment the control module comprises a decision neural network configured for outputting at least partially the control signal in response to receiving the identification of the presence of the at least one macroscopic polyurethane foam defect. In this example, the decision neural network may be a neural network such as a deep neural network. A neural network can be used to classify the identification of the presence of the at least one macroscopic polyurethane foam defect as well as also any machine parameters to then provide the control signal. A neural network such as the ResNet would work well.

In another embodiment the at least one macroscopic polyurethane foam defect comprises a scorched foam defect. The method further comprises determining a color gradient from a center region of the foam block to an edge region of the foam block using the digital image by the pattern recognition module. The method further comprises providing an oxidation warning as the indication of the presence of the at least one macroscopic polyurethane foam defect if the color gradient is above a predetermined color gradient threshold by the pattern recognition module. The method further comprises providing the control signal for causing an increase of an oxidizing agent concentration in the precursor reagents if the oxidation warning is provided. This embodiment may be beneficial because it may provide for an automated means of correcting if a scorched foam defect is detected.

In another embodiment, when the macroscopic defect comprises a pinhole, the method further comprises providing the control signal for causing a reduction of air intake into the mixer head and/or an increase in a mixing speed of the mixer head.

In another embodiment, when the macroscopic defect comprises an uneven foam geometry such as a domed top, the method further comprises providing the control signal for causing a reduction in the conveyor speed and also for preferably causing an adaptation of the raw material output factor to compensate for the change in the conveyor speed.

In another embodiment when the macroscopic defect comprises an uneven foam geometry such as an ear formation the method further comprises providing, if flat top plates are present, the control signal for causing a reduction in the conveyor speed and preferably an adaptation of the raw material output factor. If flat top plates are not present, then the method further comprises providing the control signal for causing pressure onto one or more fall plates to be reduced. Typically the last fall plate in the sequence or slabstock process has its pressure reduced.

In another embodiment when the macroscopic defect comprises a horizontal split the method further comprises providing the control signal for causing an increase in the conveyor speed.

In another embodiment when the macroscopic defect comprises a split or splits due to slow polymer cross linking the method further comprises providing the control signal for causing a change in the precursor reagents. This may, for example, be an increase in a tin catalyst amount and/or an increase in a polyurethane index of the slabstock foam.

In another embodiment, when the macroscopic defect comprises a blowhole, the method further comprises providing the control signal for causing an increase of silicon surfactant and/or foam stabilizer.

In another embodiment, the at least one macroscopic polyurethane foam defect further comprises a densification zone preferably in a lower portion of the foam block. The lower portion could for example be within a predetermined distance to the bottom of the foam block when the foam block is manufactured. The method further comprises providing a control signal for causing a lowering of one or more fall plate pivot points. It may for example be the last two pivot points of a fall plate system before the end of the slabstock process. The wrong positioning of one of the last fall plates may lead to a compression of the foam block in the lower part. Cell structure looks squeezed and density is higher. Image analysis is able detects the deformation of the cell structure in this area. Countermeasure against this macroscopic defect would be a direct lowering of the last two pivot points of the fall plate system.

In another embodiment, the at least one macroscopic polyurethane foam defect comprises a half circle densification line or a half circle cavern. The method further comprises providing a control signal for causing any one of the following: increasing a trough size, increasing a pour plate length, increasing an amine catalyst amount in the reactive mixture, lowering an inclination of a first fall plate, reducing the conveyor speed, and combinations thereof. In this macroscopic defect the reactive mixture has a low in viscosity when reaching the first fall plate. Due to the slope of the fall plate system the reaction mixture flows down in the middle of the conveyor (effectively moving faster than the process liner) and underruns the remaining block. Consequence is a lower part in the block with different age separated by a half-circle densification or split line from the remaining block. The issue is more often seen with liquid laydown than with trough principle. The half-circle densification line is easily detected by a camera system and could even extend into a cavern if enough gas from the reaction mixture penetrates into the line. Counter measures are a bigger trough or a longer pour plate and/or more amine catalyst in the reaction mixture and/or a lower inclination of the first fall plate. Also a lower conveyor speed could help as it prolongs the dwell time in the trough.

In another embodiment, the at least one macroscopic polyurethane foam defect comprises a rough top block surface and/or s-shaped splits. The method further comprises providing a control signal for causing any one of the following: reducing a trough size, reducing an amine catalyst amount in the reactive mixture, increasing the conveyor speed, and combinations thereof. Here the reaction mixture is too high in viscosity when reaching the first fall plate. The reaction mixture "breaks" and enters the fall plate in pieces leading to a rough surface of the foam block even after full rise. Furthermore, the S-curve like splits could appear in the center of the block. Both effects could be easily detected by a camera system. Counter measures are a smaller trough and/or a lower amine catalyst loading in the formulation and/or a faster conveyor speed.

In another embodiment, the at least one macroscopic polyurethane foam defect comprises a vertical densification line. The method further comprises providing a control signal for causing: an increase in trough size, an increase in amine catalyst amount in the reactive mixture, a reduction in the conveyor speed, and combinations thereof. For foaming machines with a trough fed by two pipes a vertical densification line could be seen in the middle of the block. It is caused by a low viscosity of the reaction mixture when reaching the first fall plate. The material flows in the case down on the first fall plate. It is in this respect a special case of the underrunning issue which might also lead to half-circle densification lines. The vertical densification line is easily detectable by a camera system. Counter measures are a bigger trough and/or more amine catalyst in the reaction mixture and/or a lower inclination of the first fall plate. Also a lower conveyor speed could help as it prolongs the dwell time in the trough.

In another embodiment, the at least one macroscopic polyurethane foam defect comprises gas bubbles in a lower portion of the foam block. As described above the lower portion of the foam block may be within a predetermined distance to the bottom of the foam block when the foam block is manufactured. The method further comprises providing a control signal for causing a reduction in a tin catalyst amount the reactive mixture. A bottom blow-off macroscopic defect is associated with big gas bubbles in the bottom zone which are easily detectable by a camera system. The gas bubbles are generated during the blow-off phase when the foam overall is so tight that the blow-off gas could not escape from the foam block. Typical counter measures would include a reduction of the tin catalyst loading in the formulation.

In another embodiment, the at least one macroscopic polyurethane foam defect comprises a depression or valley shape in a top surface of the foam block. The method further comprises providing a control signal for causing an increase in a foam stabilizer amount and/or an increase in the tin catalyst in the reactive mixture. A valley type shape of the top surface of the block is in most cases linked to an insufficient stabilization of the foam block. The depression in the center is generated during the blow-off when too much gas leaves the foam cell structure. The issue is easily detected by camera systems. Counter measures are an increase of the foam stabilizer or tin catalyst loading.

In another embodiment, the at least one macroscopic polyurethane foam defect comprises splits penetrating corners of the foam block towards a central region of the foam block. The method further comprises providing a control signal for causing a reduction in a foam stabilizer amount and/or a reduction in the tin catalyst in the reactive mixture. Splits penetration from the corners of the foam block into the center of the foam block with a relative flat angle are detectable for flat top processing if the pressure on the last flat top plate is too high. Often the split is also associated with the formation of "ears". The defect is easily detectable by camera systems. Counter measures are a lower pressure especially on the last flat top plate.

In another aspect the invention provides for a foam production machine that is configured for producing a polyurethane foam block as a slabstock using a continuous slabstock process defined by at least one process parameter, such as a raw material output factor or a conveyor speed. The foam production machine includes a mixing head configured to mix precursor reagents for forming a reactive mixture and a conveyor configured to receive the reactive mixture. The foam production machine further comprises a foam cutting system configured for cutting a polyurethane foam block from an end portion of the slabstock. The foam production machine further comprises a computational system and an imaging system.

The foam production machine further comprises a memory storing machine-executable instructions for execution by the computational system. Execution of the machine-executable instructions causes the computational system to control the mixing head that makes precursor reagents to provide the reactive mixture. Execution of the machine-executable instructions further causes the computational system to control the foam production machine to dispense reactive mixture to initiate foaming of the reactive mixture. Execution of the machine-executable instructions further causes the computational system to control the conveyor to receive the reactive mixture. Execution of the machine-executable instructions further causes the computational system to control the cutting system to cut the polyurethane foam block from the end portion of the slabstock to produce a cut surface.

Execution of the machine-executable instructions further causes the computational system to control the imaging system to acquire a digital image of the cut surface using the imaging system. Execution of the machine-executable instructions further causes the computational system to input the digital image into a pattern recognition module. The pattern recognition module is configured to recognize at least one pattern being indicative of at least one macroscopic polyurethane foam defect. The pattern recognition module is further configured to output an identification of the presence of the at least one macroscopic polyurethane foam defect in response to recognizing the respective pattern in the digital image.

Execution of the machine-executable instructions further causes the computational system to input the identification of the presence of the at least one macroscopic polyurethane foam defect into a control module. The control module is configured to process the inputted identification in order to output a control signal for changing the at least one process parameter of the continuous slabstock process. In another embodiment execution of the machine-executable instructions further causes the computational system to provide the operation of the foam production machine using the control signal.

In another embodiment the steps of imaging the polyurethane foam block at the end portion of the slabstock is performed repeatedly and a new block is cut from the cut surface. Execution of the machine-executable instructions further causes it to continuously control the imaging system to acquire the digital image, input the digital image into the pattern recognition module, and input the identification of the presence of the at least one macroscopic polyurethane foam defect into the control module also repeatedly. This may be used for forming a closed control loop.

In another aspect the invention provides for a system that comprises a computational system, an imaging system and a memory. The memory stores machine-executable instructions for execution by the computational system. Execution of the machine-executable instructions causes the computational system to control the imaging system to acquire a digital image of a cut surface of the polyurethane foam block using an imaging system. Execution of the machine-executable instructions further causes the computational system to send the digital image to a pattern recognition module. The pattern recognition module is configured to recognize at least one pattern being indicative of at least one macroscopic polyurethane foam defect.

The pattern recognition module is further configured to output an identification of a presence of at least one macroscopic polyurethane foam defect in response to recognizing the respective pattern in the digital image. Execution of the machine-executable instructions further causes the computational system to receive a control signal for changing the at least one process parameter of the continuous slabstock process from a control module. The control module is configured to process the inputted identification in order to output a control signal for changing the at least one process parameter of the continuous slabstock process.

In another embodiment the system further comprises a computational device accessible via a network connection. As used herein, a computational device is equivalent to a computational system. The term "computational device" is used when it is desired to differentiate one computational system from a second computational system (the computational device). As such when only one computational system is present, the term computational device and system may be used interchangeably.

The computational device comprises an additional memory storing additional machine-executable instructions, the pattern recognition module, and the control module. Execution of the additional machine-executable instructions causes the computational device to receive the digital image from the computational system via the network connection. Execution of the additional machine-executable instructions further causes the computational device to input the digital image into the pattern recognition module in order to receive the identification of the presence of at least one macroscopic polyurethane foam defect. Execution of the additional machine-executable instructions further causes the computational device to input the identification of the presence of the at least one macroscopic polyurethane foam defect into the control module to receive the control signal. Execution of the additional machine-executable instructions further causes the computational device to send the control signals to the computational system via the network connection.

This embodiment may be beneficial because the pattern recognition module and the control module can be located at a central location. The pattern recognition module and the control module can be used to service additional or multiple manufacturing facilities using the same standards and software modules.

In another embodiment the distributed system further comprises a foam production machine configured for producing polyurethane foam as a slabstock using a continuous slabstock process. The foam production machine includes a mixing head configured to mix precursor reagents for forming a reactive mixture and a conveyor configured to receive the reactive mixture. The foam production machine further comprises a foam cutting system configured for cutting a polyurethane foam block from an end portion of the slabstock. Execution of the machine-executable instructions further causes the computational system to control the mixing head that makes the precursor reagent to provide the reactive mixture. Execution of the machine-executable instructions further causes the computational system to control the foam production machine to dispense the reactive mixture to initiate foaming of the reactive mixture. Execution of the machine-executable instructions further causes the computational system to control the conveyor to receive the reactive mixture. Execution of the machine-executable instructions further causes the computational system to control the cutting system to cut the polyurethane foam block from the end portion of the slabstock to produce the cut surface.

In another aspect the invention provides for a computer program comprising machine-executable instructions, a pattern recognition module, and a control module for execution by a computational system. That is to say the machine-executable instructions, the pattern recognition module, and the control module are all executable by the computational system. Execution of the machine-executable instructions causes the computational system to receive the digital image. It may be received in different ways; for example, it may be received via a network connection, retrieved from a memory or storage location, or the computer program may control an imaging system to acquire the digital image. Execution of the machine-executable instructions further causes the computational system to input the digital image into a pattern recognition module.

The pattern recognition module is configured to recognize at least one pattern that is indicative or indicates at least one macroscopic polyurethane foam defect. The pattern recognition module is further configured to output an identification of a presence of the at least one macroscopic polyurethane foam defect in response to recognizing the respective pattern in the digital image. Execution of the machine-executable instructions further causes the computational system to input the identification of the presence of the at least one macroscopic polyurethane foam defect into a control module. The control module is configured to process the inputted identification in order to output a control signal for changing the at least one process parameter of the continuous slabstock process.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' or 'computational device' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen, Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

### Brief description of the drawings

In the following embodiments of the invention are explained in greater detail, by way of example only, making reference to the drawings in which:
- Fig. 1: illustrates a foam production machine;
- Fig. 2: illustrates a flowchart of a method for determining machine parameters of the foam production machine of Fig. 1;
- Fig. 3: illustrates a predefined predicted profile of the reactive mixture on the plurality of inclined fall plates having a substantially flat, inclined top surface;
- Fig. 4: illustrates a further example of a foam production machine;
- Fig. 5: illustrates a receptacle;
- Fig. 6: illustrates a computer system;
- Fig. 7: illustrates an example of a system;
- Fig. 8: illustrates a method of operating the system of Fig. 7;
- Fig. 9: illustrates an example of a control loop;
- Fig. 10: illustrates an example of a split defect;
- Fig. 11: illustrates an example of a pinhole defect;
- Fig. 12: illustrates an example of a domed structure defect;
- Fig. 13: illustrates an example of an ear formation defect;
- Fig. 14: illustrates an example of a blowhole defect;
- Fig. 15: illustrates an example of a scorched foam defect;
- Fig. 16: illustrates an example of a densification zone defect;
- Fig. 17: illustrates an example of a flat top split foam defect;
- Fig. 18: illustrates an example of a half circle densification line foam defect;
- Fig. 19: illustrates an example of a half circle cavern foam defect;
- Fig. 20: illustrates an example of a rough surface defect and a "s-curve" split defect;
- Fig. 21: illustrates an example of vertical densification line defect;
- Fig. 22: illustrates an example of a gas bubble defect or blow-off defect; and
- Fig. 23: illustrates and example of a depression defect or valley shape defect.

### Detailed Description

Like numbered elements in these figures are either equivalent elements or perform the same function. Elements which have been discussed previously will not necessarily be discussed in later figures if the function is equivalent.

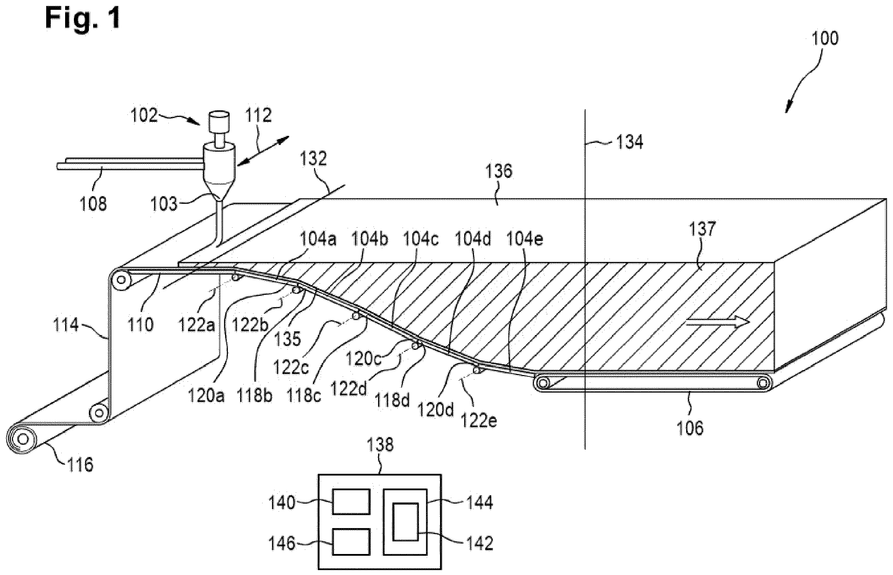

Figs. 1 through 6 describe embodiments of a foam production machine. The examples illustrated in Fig. 1 through 6 is however non-limiting. Alternative foam production machines could be used for practicing the present invention.

The present disclosure relates to the field of PU flexible foams. Herein, an exemplary process for improved prediction of parameters for industrial PU flexible slabstock foam production is described. Although significant differences exist between laboratory discontinuous flexible polyurethane foam production and large-scale continuous flexible polyurethane foam block production, it has nevertheless been found that accurate predictions of optimal machine parameters for continuous flexible slabstock foam production are possible by transferring laboratory slabstock data to simulation software.

It has been surprisingly found that accurate simulations of the rise behavior can be obtained and accurately fitted machine parameters can be derived by importing and using carefully and representatively measured rise profiles in the laboratory. A rise profile may be measured in a laboratory experiment under defined conditions and uploaded to simulation software for the slabstock foam production process in order to obtain precise and reliable predictions. It has been found that by importing precisely measured laboratory riser profiles into a simulation process for the production process, accurate predictions can be derived for the optimized machine conditions to be selected. It is important to make the laboratory foaming as representative as possible for large-scale production. This includes bringing the raw materials to the temperature to be used in the production trial, but also foaming into a thermally insulated box/crate. Surprisingly, a rise profile of a laboratory foam experiment, which is performed on a much smaller scale than a production process and also discontinuously, gives reliable predictions for setting the machine parameters in simulation software for the large-scale slabstock foam production process.

The process for improved prediction of parameters for industrial PU flexible slabstock foam production, as described further below, may include one or more of: (1) the creation of a PU flexible foam formulation; (2) the measurement of the time-resolved rise profile (also referred to as a slump profile) in the laboratory (using, for example, laser or ultrasonic distance measurement and data recording); (3) the maintenance and/or conversion of the data; (4) the uploading of the slump profile data into the production process simulation software; and (5) the derivation of the production process parameters and the simulation of the production process.

In one embodiment, the measurement of the rise profile in the laboratory is carried out in such a way that the same temperatures are chosen as in industrial practice and the rising of the foam takes place in thermally insulated boxes.

The optional maintenance and/or conversion of the data includes the processing of the measured rise profile data and the application of correction factors to correlate laboratory and machine conditions. In one embodiment, the preparation of the rise profile data includes the deletion of data point before the start of the rise of the foam and the normalization of the rise profile to % of the maximum rise height (max rise height = 100%). The transfer of the prepared rise profile data to the simulation software can be done in different database or table formats. The simulation software for the industrial foaming process uses the measured rise profile data for the calculation of the rise of the polyurethane foam during the industrial production of polyurethane foam. Parameters related to the fall plates, as well as output quantity and conveyor speeds (e.g., a conveyor belt speed), may then be derived.

As discussed briefly above, the invention is in the technical field of polyurethane (PU) foam production, more specifically software configured to import a rise profile of precursor reagents, including a catalyst, which when mixed together as a liquid, form PU foam (e.g., a PU foam block). The rise profile is generated via profile measurements taken of the liquid mixture in a laboratory as it reacts to form a foam. The software uses the imported rise profile to calculate machine parameters of a foam block production machine, such as, but not limited to, one or more of conveyor speed (e.g., conveyor belt speed), mixing trough size and/or position and pivot point positions of inclined fall plates, where such machine parameters relate to optimizing a profile of the foaming mixture on a conveyor system of the machine. Optimizing the profile of the foaming mixture on the conveyor belt system of the machine includes providing a substantially flat (i.e., substantially horizontal) profile in the cross-section of the foaming mixture on a series of inclined fall plates as the foaming mixture is transported across the series of inclined fall plates to a conveyor, such as a conveyor belt. The substantially flat profile of the foaming mixture on the series of inclined fall plates results in a foam block on the conveyor that has an essentially flat top surface, in contrast to the rounded or domed top surfaces of foam blocks produced by some conventional systems and methods. Other methods and systems exist such as the "flat top" method where mechanical pressure is used to ensure the flat top surface.

Embodiments of the invention may provide solutions to the current state-of-the-art problems of using S-shaped rise profiles based on calculating a creaming point (in time) and a full rise point (in time), where such calculations are based upon the mixing reagents, and then fitting an S-shaped curve between the creaming point and the full rise point. Such S-shaped fitted rise profiles are not particularly accurate representations of the true rise profiles and are particularly inaccurate when the components of the liquid mixture and/or the liquid mixture that generates the foam has non-standard or unusual densities, blowoff agents and/or ratios.

Embodiments of the invention may result in the production of foam, such as a foam block or foam having any polygonal shape, having dimensions that are more accurately predicted, thereby reducing waste of material and processing time when providing foam to be cut into final or intermediate products having precise predetermined dimensions and/or while improving quality of the foam by providing for more homogenous mechanical properties, e.g. tensile strength and hardness.

PU foams (polyurethane foams) and the production thereof are well known to those skilled in the art and, per se, require no further elucidation. Shaped articles in the context of the present disclosure are shaped bodies of different shape. Exemplary shapes in the context of embodiments of the invention are, for example, geometries such as spheres, cuboids, cylinders etc. Shaped PU foam articles in the context of the present disclosure are thus shaped bodies made of polyurethane foam. These shapes may include shaped hot-cure flexible PU foam articles in the context of the present disclosure are mattresses and/or cushions and also foam blocks in general.

The production of polyurethane foam is formed by the reaction of at least one polyol component and at least one isocyanate component in the presence of at least one blowing agent (e.g., water) in a polyaddition reaction.

The polyurethane foam according to embodiments of the present disclosure is flexible polyurethane foam. The foam is made by a continuous process (also called slabstock foaming process) using data (e.g., rise profile data) obtained from a discontinuous lab-produced foam-forming process. Flexible foam is typically used for comfort applications like sofas, cushions or mattresses. Other technical applications for flexible foam include filter foam or flame lamination foam. Also, applications in the textile and apparel industry include, e.g., shoulder pads, brassieres.

Rigid polyurethane foam is used for insulation applications like refrigerators or insulation boards. Rigid PU foams that are inelastic and usually have closed cells, are used for insulation purposes and are not a focus of embodiments of the present disclosure. Flexible PU foams are elastic and deformable and usually have open cells. As a result, the air can escape easily on compression.

There exists a wide variety of flexible PU foams. For instance, the person skilled in the art is aware inter alia of ester foams (made from polyester polyols), flexible hot-cure PU foams and cold-cure PU foams. Viscoelastic flexible PU foams are a relatively new type which is counted among the hot-cure flexible PU foams. In the context of the present disclosure, all flexible foam types are included. The crucial difference between a hot-cure flexible PU foam and a cold-cure PU foam lies in the different mechanical properties. It is possible to differentiate between flexible hot-cure PU foams and flexible cold-cure PU foams via rebound resilience in particular, also called ball rebound (BR) or resilience. A method of determining the rebound resilience is described, for example, in DIN EN ISO 8307:2008-03. Here, a steel ball having a fixed mass is allowed to fall from a particular height onto the test specimen and the height of the rebound in % of the drop height is then measured. The values in question for a cold-cure flexible PU foam may be in the region of > 50%. Cold-cure flexible PU foams are therefore also often referred to as HR foams (HR: High Resilience). By contrast, hot-cure flexible PU foams have rebound values of possibly 1% to not more than 50%. In the context of some exemplary embodiments of the present invention, the hot-cure flexible PU foams according to the present disclosure therefore have rebound values of possibly 1% to not more than 50%, determinable in accordance with DIN EN ISO 8307:2008-03.

A further mechanical criterion is the SAG or comfort factor. In this case, a foam sample is compressed in accordance with DIN EN ISO 2439 and the ratio of compressive stress at 65% and 25% compression is measured. Cold-cure flexible PU foams here have a SAG or comfort factor of possibly > 2.5. Hot-cure flexible PU foams have a value of possibly < 2.5. In some embodiments of the present invention, the hot-cure flexible PU foams according to the present disclosure therefore have a SAG or comfort factor of possibly < 2.5, determinable as specified above.

An exact definition of the properties can also be taken, for example, from the data sheet "PUR-Kaltschaum" [Cold-Cure PU Foam] from the Fachverband Schaumkunststoffe und Polyurethane e.V. [Specialist Association Foamed Plastics and Polyurethanes], Reference KAL20160323, last update 23.03.2016. (for example, see https://www.fsk-vsv.de/wp-content/uploads/2017/03/Produktbeschreibung-PUR-Kaltschaum.pdf). This data sheet can also be ordered directly from the Fachverband Schaumkunststoffe und Polyurethane e.V. (FSK), postal address: Stammheimerstr. 35, D-70435 Stuttgart.

The two names hot-cure flexible PU foam and cold-cure flexible PU foam are explained by the historical development of PU technology, and do not necessarily mean that different temperatures occur in the foaming process.

The different mechanical properties of hot-cure PU foams and cold-cure PU foams result from differences in the formulation for production of the foams. In the case of a cold-cure flexible PU foam, predominantly high-reactivity polyols having primary OH groups and average molar mass > 4000 g/mol are usually used. Optionally, low molecular weight crosslinkers are also used, and it is also possible for the function of the crosslinker to be assumed by higher-functionality isocyanates. In the case of hot-cure flexible PU foams, comparatively predominantly unreactive polyols having secondary OH groups and an average molar mass of < 4000 g/mol are usually used. In the case of cold-cure flexible PU foams, reaction of the isocyanate groups with the hydroxyl groups thus occurs as early as in the expansion phase (CO2 formation from -NCO and H2O) of the foam. This rapid polyurethane reaction usually leads, as a result of a viscosity increase, to a relatively high intrinsic stability of the foam during the blowing process. As a result, other foam stabilizers with different siloxane structures compared to hot-cure flexible PU foams are required. Cold-cure flexible PU foams are usually highly elastic foams. Due to the high intrinsic stability, the cells have generally not been opened sufficiently at the end of the foaming operation and the cell structure additionally has to be open by mechanical crushing. In the case of hot-cure flexible PU foams, by contrast, this is not normally necessary. Significantly greater stabilization by high molecular weight polyethersiloxane structures is important here.

Open-cell hot-cure flexible PU foams may have a gas permeability (also called "porosity") within a range from 1 to 6.5 scfm. This is measured by applying a pressure differential and measuring the volume of air that flows through in accordance with ASTM D 3574 (2011-00). The method is elucidated in detail further below (i.e., see step (f) in Example 1). Scfm (standard cubic feet per minute) is measured under standard conditions (23°C, 100 kPa).

Depending on the application, hot-cure flexible PU foams may have a foam density between 8 and 80 kg/m3. Especially when such hot-cure flexible PU foams are used as mattresses, mattress constituents and/or cushions, said foams are differentiated according to regional wants and needs, requirements and preferences of consumers. Some hot-cure flexible PU foam for mattress applications have a foam density of preferably 25-30 kg/m³.

A specific class of hot-cure flexible PU foams is that of viscoelastic PU foams. These are also known as "memory foam" and exhibit both a low rebound resilience (preferably < 10%) and a slow, gradual recovery after compression (recovery time preferably 2-10 s). Materials of this kind may be highly valued for, in particular, their energy- and sound-absorbing properties too. Typical viscoelastic flexible foams usually have a lower porosity and a high density (or a high foam density (FD)) compared to other hot-cure flexible PU foams. Some cushions may have a foam density of preferably 30-50 kg/m³ and are thus at the lower end of the density scale typical of viscoelastic foams, whereas viscoelastic PU foams for mattresses preferably have a density in the range of 50-130 kg/m³.

In hot-cure flexible PU foams, the hard and soft segments become oriented relative to one another during the reaction and then spontaneously separate from one another to form morphologically different phases within the "bulk polymer". Such materials are also referred to as "phase-separated" materials. The glass transition temperature in the case of viscoelastic foams is preferably between -20 and +15°C. The glass transition temperature of other hot-cure flexible PU foams and cold-cure flexible PU foams, by contrast, is usually below -35°C. Such "structural viscoelasticity" in the case of open-cell viscoelastic hot-cure flexible PU foams which is based essentially on the glass transition temperature of the polymer may be distinguished from a pneumatic effect. In the latter case, the cell structure is relatively closed (low porosity). As a result of the low air permeability, the air flows back in only gradually after compression, which results in slowed recovery.

Various hot-cure flexible PU foams are classified not only according to foam density but often also according to their compressive strength, also referred to as load-bearing capacity, for particular applications. For instance, in some examples compressive strength CLD (compression load deflection), 40% in accordance with DIN EN ISO 3386-1:2015-10, for hot-cure flexible PU foams is preferably in the range of 2.0-8.0 kPa; viscoelastic polyurethane foams preferably have values of 0.1-5.0 kPa, especially 0.5-2.5 kPa.

Hot-cure flexible PU foams and production thereof are known per se. In an embodiment of the present invention, a hot-cure flexible PU foam has a compressive strength CLD, 40% in accordance with DIN EN ISO 3386-1:2015-10, of 2.0 - 8.0 kPa and/or a rebound resilience of 1-50%, measured in accordance with DIN EN ISO 8307:2008-03, and/or a foam density of 8 to 80 kg/m3 and/or a porosity of 1 to 6 scfm, especially 1.5 to 4.5 scfm, more preferably 1.75 to 4.25 scfm. A possible production method is described, for example, in EP 2 481 770 A2 or EP 2 182 020 A1. For the purposes of the present disclosure, in an embodiment of the invention, the viscoelastic flexible PU foam has a glass transition temperature between - 20°C and +15°C and/or a compressive strength CLD, 40% in accordance with DIN EN ISO 3386-1:2015-10, of 0.1-5.0 kPa, especially 0.5-2.5 kPa, and/or a rebound resilience of < 10%, measured in accordance with DIN EN ISO 8307:2008-03, and/or a foam density of 30 to 130 kg/m3 and/or a porosity (after crushing the foam) of 1 to 6 scfm, especially 1.5 to 4.5 scfm, more preferably 1.75 to 4.25 scfm. A possible method of production is described, for example, in WO 2013/131710 A2. The glass transition temperature can be measured by means of dynamic mechanical analysis (DMA) (DIN 53513:1990-03) or by means of differential calorimetry (DSC) (ISO 11357-2:2013). Strictly speaking, it is a glass transition range which extends over a temperature range. Values reported are therefore averages.

According to an embodiment of the present invention, a shaped hot-cure flexible PU foam article (e.g., foam to be used as a mattress or the mattress produced by the foam process of the present disclosure), has a height of at least 1 cm to not more than 50 cm and a width of from at least 20 cm to not more than 300 cm, and a length of at least 20 cm to not more than 300 cm. Example dimensions are, for example, heights in the range from 5 cm to 40 cm, widths in the range from 70 cm to 200 cm, lengths in the range from 150 cm to 220 cm. According to another embodiment of the present invention, a shaped PU foam article (e.g., a cushion), has a height of at least 1 cm to not more than 40 cm and a width of at least 15 cm to not more than 200 cm and a length of at least 15 cm to not more than 200 cm, examples of preferred dimensions being heights in the range from 2 cm to 30 cm, widths in the range from 15 cm to 50 cm, lengths in the range from 15 cm to 50 cm.

In a further embodiment of the invention, the shaped flexible PU foam article may also be a cold-cure PU foam mattress, a viscoelastic flexible PU foam mattress, a hot-cure flexible PU foam mattress, a PU gel foam mattress, a latex mattress or a box spring mattress, each containing at least a portion made of a hot-cure flexible PU foam according to the invention. These types of mattress are known per se to those skilled in the art and are also marketed worldwide under these names. Mattresses made solely of hot-cure flexible PU foam are usually referred to on the market simply as foam mattresses. The term mattress as used for the purposes of the invention also encompasses corresponding mattress coverings and underlays.

The provision of the various flexible PU foams is that they are made by a continuous slabstock process. Discontinuous processes like box foaming or foaming into a mold (molded PU foam) are not a focus of embodiments of the present disclosure. In the continuous production process of flexible foam the expansion of the foam is possible in a rectangular direction to the movement of the foam or the reaction mixture. The gas pressure in the expanding foam is therefore equivalent to the gas pressure against which the rising foam is expanding. This is in contrast to molded foaming in which case a significant over pressure is reached in the mold versus the outside while foaming. The movement of the expanding foam is usually in a horizontal direction forced by a conveyor (e.g., a conveyor belt). In some rare cases also a movement in a vertical direction is possible.

The production of corresponding hot-cure flexible PU foams in principle requires no further explanation, but some details of the production of the PU foam used for explanatory purposes of embodiments of the invention are given below. The subject matter of the invention will be described by way of example below, without any intention that the invention be restricted to these illustrative embodiments. Where ranges, general formulae or classes of compounds are specified below, these are intended to encompass not only the corresponding ranges or groups of compounds which are explicitly mentioned but also all subranges and subgroups of compounds which can be obtained by removing individual values (ranges) or compounds. Where documents are cited in the context of the present description, the entire content thereof, particularly with regard to the subject matter that forms the context in which the document has been cited, is intended to form part of the disclosure content of the present invention. Unless stated otherwise, percentages are figures in per cent by weight. When average values are reported below, the values in question are weight averages, unless stated otherwise. Where parameters which have been determined by measurement are reported below, the measurements have been carried out at a temperature of 23°C and a pressure of 100 kPa, unless stated otherwise. For the purposes of the present invention, polyurethanes are all reaction products derived from isocyanates, in particular polyisocyanates, and appropriately isocyanate-reactive molecules. These include polyisocyanurates, polyureas, and allophanate-, biuret-, uretdione-, uretonimine- or carbodiimide-containing isocyanate or polyisocyanate reaction products. It will be apparent that a person skilled in the art seeking to produce the different flexible polyurethane foam types, for example hot-cure flexible PU foams, will appropriately select the substances necessary for each respective purpose, such as isocyanates, polyols, stabilizers, surfactants, etc., in order to obtain the polyurethane type, especially polyurethane foam type, desired in each case. Further details of the usable starting materials, catalysts and auxiliaries and additives can be found, for example, in Kunststoffhandbuch [Plastics Handbook], volume 7, Polyurethane [Polyurethanes], Carl-Hanser-Verlag Munich, 1st edition 1966, 2nd edition 1983 and 3rd edition 1993. The compounds, components and additives which follow are mentioned merely by way of example and can be replaced and/or supplemented by other substances known to those skilled in the art.

The isocyanate components used may be one or more organic polyisocyanates having two or more isocyanate functions. Polyol components used may be one or more polyols having two or more isocyanate-reactive groups.

Isocyanates suitable as isocyanate components for the purposes of this invention are all isocyanates containing at least two isocyanate groups. Generally, it is possible to use all aliphatic, cycloaliphatic, arylaliphatic and possibly aromatic polyfunctional isocyanates known per se. Isocyanates may possibly used in a range from 60 to 350 mol%, more preferably in a range from 60 to 140 mol%, relative to the sum total of the isocyanate-consuming components.

Specific examples are alkylene diisocyanates having 4 to 12 carbon atoms in the alkylene radical, e.g. dodecane 1,12-diisocyanate, 2-ethyltetramethylene 1,4-diisocyanate, 2-methylpentamethylene 1,5-diisocyanate, tetramethylene 1,4-diisocyanate and possibly hexamethylene 1,6-diisocyanate (HMDI), cycloaliphatic diisocyanates such as cyclohexane 1,3- and 1,4-diisocyanate and also any mixtures of these isomers, 1-isocyanato-3,3,5-trimethyl-5-isocyanatomethylcyclohexane (isophorone diisocyanate or IPDI for short), hexahydrotolylene 2,4- and 2,6-diisocyanate and also the corresponding isomer mixtures, and possibly aromatic diisocyanates and polyisocyanates, for example tolylene 2,4- and 2,6-diisocyanate (TDI) and the corresponding isomer mixtures, mixtures of diphenylmethane 2,4'- and 2,2'-diisocyanates (MDI) and polyphenylpolymethylene polyisocyanates (crude MDI) and mixtures of crude MDI and tolylene diisocyanates (TDI). The organic diisocyanates and polyisocyanates can be used individually or in the form of mixtures thereof.

It is also possible to use isocyanates which have been modified by the incorporation of urethane, uretdione, isocyanurate, allophanate and other groups, called modified isocyanates.

Particularly suitable organic polyisocyanates which are therefore used with particular preference are various isomers of tolylene diisocyanate (tolylene 2,4- and 2,6-diisocyanate (TDI), in pure form or as isomer mixtures of various composition), diphenylmethane 4,4'-diisocyanate (MDI), "crude MDI" or "polymeric MDI" (contains the 4,4' isomer and also the 2,4' and 2,2' isomers of MDI and products having more than two rings) and also the two-ring product which is referred to as "pure MDI" and is composed predominantly of 2,4' and 4,4' isomer mixtures, and prepolymers derived therefrom. Examples of particularly suitable isocyanates are detailed, for example, in EP 1712578, EP 1161474, WO 00/58383, US 2007/0072951, EP 1678232 and WO 2005/085310, which are hereby fully incorporated by reference.

Polyols suitable as polyol component for the purposes of the present invention are all organic substances having two or more isocyanate-reactive groups, possibly OH groups, and also formulations thereof. Exemplary polyols may be all polyether polyols and/or hydroxyl-containing aliphatic polycarbonates which are customarily used for producing polyurethane systems, in particular polyurethane foams, in particular polyether polycarbonate polyols and/or filled polyols (polymer polyols) such as SAN, PHD and PIPA polyols which contain solid organic fillers up to a solids content of 40% or more in dispersed form, and/or autocatalytic polyols which contain catalytically active functional groups, in particular amino groups, and/or polyols of natural origin, known as "natural oil-based polyols" (NOPs). The polyols for hot-cure flexible PU foam may possibly have a functionality of 1.8 to 8 and number-average molecular weights in the range from 500 to 4000 g/mol. The polyols having OH numbers in the range from 25 to 400 mg KOH/g are typically used. The number-average molecular weights are typically determined by gel permeation chromatography (GPC), especially using polypropylene glycol as reference substance and tetrahydrofuran (THF) as eluent. The OH numbers can be determined, in particular, in accordance with the DIN standard DIN 53240:1971-12. Depending on the required properties of the resulting foams, it is possible to use appropriate polyols, as described for example in: US 2007/0072951 A1, WO 2007/111828, US 2007/0238800, US 6359022 or WO 96/12759. Further polyols are known to those skilled in the art and can be found, for example, in EP-A-0380993 or US-A-3346557.

In an embodiment of the invention, especially for production of flexible slabstock foam, polyether alcohols having secondary hydroxyl groups in amounts of preferably above 50%, more preferably above 90%, are used, especially those having a propylene oxide block or random propylene oxide and ethylene oxide block at the chain end, or those based solely on propylene oxide blocks. Such polyether alcohols preferably have a functionality of 2 to 8, more preferably 2 to 4, number-average molecular weights in the range from 500 to 4000 g/mol, preferably 800 to 4000 g/mol, more preferably 2500 to 4000 g/mol, and typically OH numbers in the range from 20 to 100 mg KOH/g, preferably 40 to 60 mg KOH/g.

In a further embodiment of the invention, di- and/or trifunctional polyether alcohols comprising primary hydroxyl groups in amounts of preferably above 50%, more preferably above 80%, in particular those having an ethylene oxide block at the chain end, are additionally also used. Polyols for cold-cure flexible PU foams ("HR polyols") form part of this category if the molar mass is simultaneously > 4000 g/mol. According to the required properties of this embodiment, which is preferred in accordance with embodiments of the invention, especially for production of the abovementioned hot-cure flexible PU foams, preference is given to using not only the polyether alcohols described here but also further polyether alcohols which bear primary hydroxyl groups and are based predominantly on ethylene oxide, in particular having a proportion of ethylene oxide blocks of > 70%, preferably > 90% ("hypersoft polyol"). All polyether alcohols described in the context of this preferred embodiment preferably have a functionality of 2 to 8, more preferably 2 to 5, number-average molecular weights in the range from 500 to 8000 g/mol, preferably 500 to 7000 g/mol, and typically OH numbers in the range from 5 to 100 mg KOH/g, preferably 20 to 60 mg KOH/g. Polyols having primary OH functions are used here in the case of the hot-cure flexible PU foams of the invention, in a preferred embodiment, not alone but rather in combination with polyols having secondary OH groups.

In a further embodiment of the invention, autocatalytic polyols are used.

In a further preferred embodiment of the invention, especially for production of viscoelastic flexible PU foams, preference is given to using mixtures of various, preferably two or three, polyfunctional polyether alcohols. The polyol combinations used here typically consist of a low molecular weight "crosslinker" polyol having high functionality, preferably having an OH number of from 100 to 400 mg KOH/g, and/or a conventional high molecular weight flexible slabstock foam polyol or HR polyol and/or a "hypersoft" polyether polyol, preferably having an OH number of 20 to 40 mg KOH/g, with a high proportion of ethylene oxide and having cell-opening properties. If HR polyols are also used in the viscoelastic foam formulation, the proportion by mass thereof in the polyol mixture is < 50%.

Polyester polyols were the first polyols used in the beginning of PU development, and are produced by polycondensation of a diacid with excess diol. Difunctional monomers are used to obtain a linear polymer. Addition of small amounts of multifunctional starters with functionality larger than two as trimethylol propane and glycerin could be used to generate polymers with an average functionality higher than two. The most used acids are adipic acid and phthalic acid. Adipic acid based polyester polyols are used in applications where flexibility is wanted, as in flexible polyurethane foams. Phthalic acids (or phthalic anhydride) based polyols, have rigid chains and are used in rigid foams and in high performance coatings. For flexible PU foam aliphatic polyester polyols are often used based typically on adipic acid, diethylene glycol and trimethylol propane or glycerine to induce a higher functionality. The average molecular weight is typically 2000 - 3000 g/mol and the OH number 57 -63 mg KOH/g.

In the polyester polyols production process, the diol, triol, etc. is first heated to a temperature of 60-90°C. Then the dicarboxylic acid is added, and removal of the reaction water begins. For obtaining the targeted molecular weight the excess diol is calculated by means of Flory Equation. Usually, the reaction is completed at temperatures up to 200°C. Nitrogen, carbon dioxide, or vacuum is used to remove the water and to reach the wanted conversion of 99.9%, and the resulting polyester may have an acid number less than two. This conversion is necessary to minimize the presence of residual carboxylic end groups that can reduce the reactivity. The polyesters are composed of all possible oligomers ranging from the monomers to high molecular weight species. Usually, aliphatic polyester polyols used in flexible polyurethanes are based on polyadipates diols such as ethylene glycol, diethylene glycol, propylene glycol, 1,4-butane diol, 1,6-hexane diol, etc. The growth of the diol chain results in greater PU flexibility and hydrolytic stability and reduction of polarity and glass transition temperature. Lightly branched poly(diethyleneglycol adipates), which are used mainly to make flexible foams, and a wide range of adipates made with more than one aliphatic diol. These are used to make solid and microcellular elastomers, flexible coatings and adhesives. Relatively low cost polyester polyols, based on recovery materials from recycling processes are also available. Mixed adipic, glutaric and succinic acid polyesters are made using purified nylon waste acids. In comparison with PU based polyether polyols, the PU based polyesters are more resistant to oil, grease, solvents and oxidation. They possess better properties related to tension and tear strength, flex fatigue, abrasion, adhesion and dimensional stability. On the other hand, PU based esters are more sensitive to hydrolysis and microbiological attack. The production process of flexible polyurethane foam based on polyester polyols follows the same principles as polyether polyol based polyurethane flexible foam. The machinery is therefore also equivalent.

According to some embodiments of the present invention, the simulation of the production process could be derived from laboratory rise profiles in the same way as for flexible PU foam based on polyether polyols. Often PU flexible foams based on polyester polyols are called just "Polyester foams". It is also possible to combine in flexible PU foam formulations polyether and polyester polyols. Such foams are often called "hybrid foams". All those foams are within the scope of the present inventions as long as they are produced by a continuous production process.

In a further embodiment of the invention, recycled polyols are used. Recycled polyols are polyols that are obtained from PU foam waste. This may be production waste from hot-cure flexible PU foam production or from hot-cure flexible PU foam waste after use by the consumer (for example old mattresses). In both cases, PU foam is liquefied by chemical processes. Various processes are useful here, for example, glycolysis, hydrolysis or acidolysis. The liquid recycled polyol obtained can then be reused for production of hot-cure flexible PU foam. However, such hot-cure flexible PU foams often feature distinctly adverse mechanical properties, such as resistance to roll compression. One source for further information on the use of recycled polyols in hot-cure flexible PU foams is the following BMBF research report: https://www.cleaner-production.de/fileadmin/assets/bilder/BMBF-Projekte/01RI05070-075_-_Abschlussbericht.pdf.

The additional use of recycled polyols in the context of the invention corresponds to a embodiment of the invention for each item of subject-matter claimed.

An exemplary ratio of isocyanate and polyol, expressed as the index of the formulation, i.e. as stoichiometric ratio of isocyanate groups to isocyanate-reactive groups (e.g. OH groups, NH groups) multiplied by 100, is in the range from 50 to 140, preferably 70 to 130, more preferably 85 to 125. An index of 100 represents a molar reactive group ratio of 1:1.

The flexible PU foams according to embodiments of the invention can also be produced using catalysts. The expression "catalysts", for the purposes of the present invention, includes all compounds known from the prior art which are able to catalyze isocyanate reactions and/or are used as catalysts, cocatalysts or activators in the production of polyisocyanate reaction products, in particular polyurethane foams.

Suitable catalysts are available; these are especially substances that catalyze the gel reaction (isocyanate-polyol), the blowing reaction (isocyanate-water) and/or the di-or trimerization of the isocyanate. Such catalysts are possibly nitrogen compounds, especially amines and ammonium salts, and/or metal compounds.

Examples of suitable nitrogen compounds as catalysts for the purposes of the present invention are the amines triethylamine, triethanolamine, diethanolamine, N,N-dimethylcyclohexylamine, N,N-dicyclohexylmethylamine, N,N-dimethylaminoethylamine, N,N,N',N'-tetramethylethane-1,2-diamine, N,N,N',N'-tetramethylpropane-1,3-diamine, N,N,N',N'-tetramethylbutane-1,4-diamine, N,N,N',N'-tetramethylhexane-1,6-diamine, N-[2-(dimethylamino)ethyl]-N,N',N'-trimethylethane-1,2-diamine, 2-[(2-(dimethylamino)ethyl)methylamino]ethanol, N',N'-dimethylpropane-1,3-diamine, N',N'-diethylpropane-1,3-diamine, 1-(2-aminoethyl)pyrrolidine, 1-(3-aminopropyl)pyrrolidine, 1-[3-(dimethylamino)propyl-(2-hydroxypropyl)amino]propan-2-ol, 2-[[3-(dimethylamino)propyl]methylamino]ethanol, 3-(2-dimethylamino)ethoxy)propylamine, N-[3-(dimethylamino)propyl]-N',N'-dimethylpropane-1,3-diamine, N'-[3-(dimethylamino)propyl]-N,N,N'-trimethylpropane-1,3-diamine, 1-[bis[3-(dimethylamino)propyl]amino]-2-propanol, N,N-bis[3-(dimethylamino)propyl]-N',N'-dimethylpropane-1,3-diamine, 1,4-diazabicyclo[2.2.2]octane, 1,4-diazabicyclo[2.2.2]octane-2-methanol, 1,2-dimethylimidazole, N-(2-hydroxypropyl)imidazole, 2-methyl-1-(2-methylpropyl)imidazole, N-(3-aminopropyl)imidazole, N-methylimidazole, 1-(3-aminopropyl)-2-methyl-1H-imidazole, N-ethylmorpholine, N-methylmorpholine, 2,2,4-trimethyl-2-silamorpholine, N-ethyl-2,2-dimethyl-2-silamorpholine, N-(2-aminoethyl)morpholine, N-(2-hydroxyethyl)morpholine, 2,2'-dimorpholinodiethyl ether, N,N'-dimethylpiperazine, N-(2-hydroxyethyl)piperazine, N-(2-aminoethyl)piperazine, N,N-dimethylbenzylamine, N,N-(dimethylamino)ethanol, N,N-(diethylamino)ethanol, 1-(2-hydroxyethyl)pyrrolidine, 3-dimethylamino-1-propanol, 1-(3-hydroxypropyl)pyrrolidine, 2-[2-(dimethylamino)ethoxy]ethanol, 2-[2-(diethylamino)ethoxy]ethanol, bis(2-dimethylaminoethyl) ether, 2-[[2-(2-(dimethylamino)ethoxy)ethyl]methylamino]ethanol, N-[2-[2-(dimethylamino)ethoxy]ethyl]-N-methylpropane-1,3-diamine, 1,3,5-tris[3-(dimethylamino)propyl]hexahydro-1,3,5-triazine, 1,8-diazabicyclo[5.4.0]undec-7-ene, 1,5-diazabicyclo[4.3.0]non-5-ene, 1,5,7-triazabicyclo[4.4.0]dec-5-ene, N-methyl-1,5,7-triazabicyclo[4.4.0]dec-5-ene, 1,4,6-triazabicyclo[3.3.0]oct-4-ene, 1,1,3,3-tetramethylguanidine, 2-tert-butyl-1,1,3,3-tetramethylguanidine, guanidine, 1,1'-[(3-{bis[3-(dimethylamino)propyl]amino}propyl)imino]dipropan-2-ol, (3-aminopropyl)bis[3-(dimethylamino)propyl]amine, 3-(dimethylamino)propylurea, 1,3-bis[3-(dimethylamino)propyl]urea, 3-dimethylamino-N,N-dimethylpropanamide, 6-(dimethylamino)hexan-1-ol and 2,4,6-tris[(dimethylamino)methyl]phenol.

Catalysts and/or mixtures of this kind are supplied commercially, for example, under the Jeffcat^{®} ZF-10, Lupragen^{®} DMEA, Lupragen^{®} API, Toyocat^{®} RX 20 and Toyocat^{®} RX 21, DABCO^{®} RP 202, DABCO^{®} RP 204, DABCO^{®} NE 300, DABCO^{®} NE 310, DABCO^{®} NE 400, DABCO^{®} NE 500, DABCO^{®} NE 600, DABCO^{®} NE 650, DABCO^{®} NE 660, DABCO^{®} NE 740, DABCO^{®} NE 750, DABCO^{®} NE 1060, DABCO^{®} NE 1080, DABCO^{®} NE 1082 and DABCO^{®} NE 2039, Niax^{®} EF 860, Niax^{®} EF 890, Niax^{®} EF 700, Niax^{®} EF 705, Niax^{®} EF 708, Niax^{®} EF 600, Niax^{®} EF 602, Kosmos^{®} 54, Kosmos^{®} EF, and Tegoamin^{®} ZE 1 names.

Suitable metal compounds as catalysts may be selected, for example, from the group consisting of metal-organic or organometallic compounds, metal-organic or organometallic salts, organic metal salts, inorganic metal salts and from the group consisting of charged or uncharged metal-containing coordination compounds, in particular metal chelate complexes. The expression "metal-organic or organometallic compounds" in the context of embodiments of this invention especially encompasses the use of metal compounds having a direct carbon-metal bond, also referred to here as metal organyls (e.g., tin organyls) or organometallic compounds (e.g. organotin compounds). The expression "organometallic or metal-organic salts" in the context of embodiments of this invention especially encompasses the use of metal-organic or organometallic compounds having salt character, i.e. ionic compounds in which either the anion or cation is metal-organic in nature (e.g. organotin oxides, organotin chlorides or organotin carboxylates). The expression "organic metal salts" in the context of embodiments of this invention especially encompasses the use of metal compounds which do not have any direct carbon-metal bond and are simultaneously metal salts, in which either the anion or the cation is an organic compound (e.g. tin(II) carboxylates). The expression "inorganic metal salts" in the context of embodiments of this invention especially encompasses the use of metal compounds or of metal salts in which neither the anion nor the cation is an organic compound, e.g. metal chlorides (e.g. tin(II) chloride), pure metal oxides (e.g. tin oxides) or mixed metal oxides, i.e. containing a plurality of metals, and/or metal silicates or aluminosilicates. The expression "coordination compound" in the context of embodiments of this invention especially encompasses the use of metal compounds formed from one or more central particles and one or more ligands, the central particles being charged or uncharged metals (e.g. metal- or tin-amine complexes). The expression "metal-chelate complexes" in the context of embodiments of this invention especially encompasses the use of metal coordination compounds which have ligands having at least two coordination or bonding positions to the metal centre (e.g. metal- or tin-polyamine or metal- or tin-polyether complexes). Suitable metal compounds, especially as defined above, as catalysts in embodiments of the present invention may be selected, for example, from all metal compounds comprising lithium, sodium, potassium, magnesium, calcium, scandium, yttrium, titanium, zirconium, vanadium, niobium, chromium, molybdenum, tungsten, manganese, cobalt, nickel, copper, zinc, mercury, aluminium, gallium, indium, germanium, tin, lead, and/or bismuth, especially sodium, potassium, magnesium, calcium, titanium, zirconium, molybdenum, tungsten, zinc, aluminium, tin and/or bismuth, more preferably tin, bismuth, zinc and/or potassium. Suitable metal-containing coordination compounds include, for example, any metal acetylacetonates such as nickel(II) acetylacetonate, zinc(II) acetylacetonate, copper(II) acetylacetonate, molybdenum dioxoacetylacetonate, any iron acetylacetonates, any cobalt acetylacetonates, any zirconium acetylacetonates, any titanium acetylacetonates, any bismuth acetylacetonates and any tin acetylacetonates. Particularly suitable metal-organic salts and organic metal salts, particularly as defined above, as catalysts in the context of the present invention, are, for example, organotin, tin, zinc, bismuth and potassium salts, especially corresponding metal carboxylates, alkoxides, thiolates and mercaptoacetates, for example dibutyltin diacetate, dimethyltin dilaurate, dibutyltin dilaurate (DBTDL), dioctyltin dilaurate (DOTDL), dimethyltin dineodecanoate, dibutyltin dineodecanoate, dioctyltin dineodecanoate, dibutyltin dioleate, dibutyltin bis-n-laurylmercaptide, dimethyltin bis-n-laurylmercaptide, monomethyltin tris-2-ethylhexylmercaptoacetate, dimethyltin bis-2-ethylhexylmercaptoacetate, dibutyltin bis-2-ethylhexylmercaptoacetate, dioctyltin bisisooctylmercaptoacetate, tin(II) acetate, tin(II) 2-ethylhexanoate (tin(II) octoate), tin(II) isononanoate (tin(II) 3,5,5-trimethylhexanoate), tin(II) neodecanoate, tin(II) ricinoleate, zinc(II) acetate, zinc(II) 2-ethylhexanoate (zinc(II) octoate), zinc(II) isononanoate (zinc(II) 3,5,5-trimethylhexanoate), zinc(II) neodecanoate, zinc(II) ricinoleate, bismuth acetate, bismuth 2-ethylhexanoate, bismuth octoate, bismuth isononanoate, bismuth neodecanoate, potassium formate, potassium acetate, potassium 2-ethylhexanoate (potassium octoate), potassium isononanoate, potassium neodecanoate and/or potassium ricinoleate. Suitable metallic catalysts are generally selected with preference such that they do not have any inherent nuisance odor, are substantially unobjectionable toxicologically, and endow the resultant polyurethane systems, especially polyurethane foams, with as low a level of catalyst-induced emissions as possible.

Aside from amines and metal compounds, it is also possible to use ammonium salts as catalysts. Suitable examples are ammonium formate and/or ammonium acetate.

Suitable catalysts are mentioned, for example, in DE 102007046860, EP 1985642, EP 1985644, EP 1977825, US 2008/0234402, EP 0656382 B1 and US 2007/0282026 A1, and the patent documents cited therein.

Suitable use amounts of catalysts are guided by the type of catalyst and as an example may be in the range from 0.01 to 10.0 pphp, more preferably in the range from 0.02 to 5.00 pphp (= parts by weight based on 100 parts by weight of polyol).

Optional additives used may be all substances which may find use in the production of polyurethanes, especially of flexible PU foams, for example blowing agents, preferably water for formation of CO2, and, if necessary, further physical blowing agents, crosslinkers and chain extenders, stabilizers against oxidative degradation (called antioxidants), flame retardants, surfactants, biocides, cell-refining additives, cell openers, solid fillers, antistatic additives, nucleating agents, thickeners, dyes, pigments, colour pastes, fragrances, emulsifiers, buffer substances and/or catalytically active substances, especially as defined above.

Water is generally used as the blowing agent in the production of flexible PU foams. Preference is given to using such an amount of water that the water concentration is from 0.10 to 10.0 pphp (pphp = parts by weight based on 100 parts by weight of polyol).

It is also possible to use suitable physical blowing agents. These are, for example, liquefied CO2 and volatile liquids, for example hydrocarbons having 3, 4 or 5 carbon atoms, preferably cyclopentane, isopentane and n-pentane, oxygen-containing compounds such as methyl formate, acetone and dimethoxymethane, or chlorinated hydrocarbons, preferably dichloromethane and 1,2-dichloroethane.

Apart from water and the physical blowing agents, it is also possible to use other chemical blowing agents which react with isocyanates to evolve a gas, for example formic acid.

Optional crosslinkers and optional chain extenders are low molecular weight, polyfunctional compounds which are reactive toward isocyanates. Suitable compounds are, for example, hydroxyl- or amine-terminated substances such as glycerol, neopentyl glycol, 2-methyl-1,3-propanediol, triethanolamine (TEOA), diethanolamine (DEOA) and trimethylolpropane. The use concentration is usually in the range from 0.1 to 5 parts, based on 100 parts of polyol, but can also deviate therefrom depending on the formulation.

Suitable optional stabilizers against oxidative degradation, so-called antioxidants, preferably include all commonly used free-radical scavengers, peroxide scavengers, UV absorbers, light stabilizers, complexing agents for metal ion contaminants (metal deactivators). Preference is given to using compounds of the following classes of substances, or classes of substances containing the following functional groups, with substituents on the respective parent molecules preferably being, in particular, substituents which have groups which are reactive toward isocyanate: 2-(2'-hydroxyphenyl)benzotriazoles, 2-hydroxybenzophenones, benzoic acids and benzoates, phenols, in particular comprising tert-butyl and/or methyl substituents on the aromatic entity, benzofuranones, diarylamines, triazines, 2,2,6,6-tetramethylpiperidines, hydroxylamine, alkyl and aryl phosphites, sulfides, zinc carboxylates, diketones.

Suitable optional flame retardants in the context of embodiments of this invention are all substances which are regarded as suitable for this purpose according to the prior art. Example flame retardants are, for example, liquid organophosphorus compounds such as halogen-free organophosphates, e.g. triethyl phosphate (TEP), halogenated phosphates, for example tris(1-chloro-2-propyl) phosphate (TCPP) and tris(2-chloroethyl) phosphate (TCEP), and organic phosphonates, for example dimethyl methanephosphonate (DMMP), dimethyl propanephosphonate (DMPP), or solids such as ammonium polyphosphate (APP) and red phosphorus. Suitable flame retardants further include halogenated compounds, for example halogenated polyols, and also solids such as expandable graphite and melamine.

For stabilization of the rising foam mixture and for influencing of the foam properties of polyurethane foams, organomodified siloxanes are usually used in the production of hot-cure flexible PU foams. (Organomodified) siloxanes suitable for this purpose are described for example in the following documents: EP 0839852, EP 1544235, DE 102004001408, EP 0839852, WO 2005/118668, US 20070072951, DE 2533074, EP 1537159, EP 533202, US 3933695, EP 0780414, DE 4239054, DE 4229402, EP 867465. These compounds may be prepared as described in the prior art. Suitable examples are described, for instance, in US 4147847, EP 0493836 and US 4855379. Foam stabilizers for hot-cure flexible PU foams are characterized by large siloxane structures having more than 50 Si units and pendant polyethers. These foam stabilizers are also referred to as polydialkylsiloxanepolyoxyalkylene copolymers. The structure of these compounds may be such that, for example, a long-chain copolymer of ethylene oxide and propylene oxide is bonded to a polydimethylsiloxane radical. The linkage between the polydialkylsiloxane and the polyether moiety may be via an SiC linkage or an Si-O-C bond. In structural terms, the polyether or the different polyethers may be bonded to the polydialkylsiloxane in terminal or lateral positions. The alkyl radical of the siloxane may be aliphatic, cycloaliphatic or aromatic. Methyl groups are very particularly advantageous. The organomodified polydialkylsiloxane may be linear or else contain branches. Suitable stabilizers, especially foam stabilizers, are described inter alia in US 2834748, US2917480 and in US3629308. The function of the foam stabilizer is to assure the stability of the foaming reaction mixture. The contribution to foam stabilization correlates here with siloxane chain length. Without foam stabilizer, a collapse is observed, and hence no homogeneous foam is obtained. In the case of some flexible PU foam types that have higher stability and hence a lower tendency to collapse, it is also possible to use low molecular weight polyethersiloxanes. These then have siloxane chain lengths much shorter than 50. For instance, in the case of cold-cure flexible PU foams or flexible foams based on polyester polyols, unmodified or modified short-chain siloxanes are used. When long-chain and hence more potent siloxane stabilizers are used, by contrast, over-stabilization and hence shrinkage after foam production is observed in such foam types. Foam stabilizers may in principle be selected as desired in the context of embodiments of the present invention.

The compounds above can, for example, be used together with suitable solvents and/or further additives. As optional solvents, it is possible to employ all suitable substances. Depending on the application, it is possible to use aprotic nonpolar, aprotic polar and protic solvents. Suitable aprotic nonpolar solvents can, for example, be selected from the following classes of substances, or classes of substances containing the following functional groups: aromatic hydrocarbons, aliphatic hydrocarbons (alkanes (paraffins) and olefins), carboxylic esters (e.g. isopropyl myristate, propylene glycol dioleate, decyl cocoate or other esters of fatty acids) and polyesters, (poly)ethers and/or halogenated hydrocarbons having a low polarity. Suitable aprotic polar solvents can, for example, be selected from the following classes of substances, or classes of substances containing the following functional groups: ketones, lactones, lactams, nitriles, carboxamides, sulfoxides and/or sulfones. Suitable protic solvents can, for example, be selected from the following classes of substances, or classes of substances containing the following functional groups: alcohols, polyols, (poly)alkylene glycols, amines, carboxylic acids, in particular fatty acids and/or primary and secondary amides. Particular preference is given to solvents which are readily employable in the foaming operation and do not adversely affect the properties of the foam. For example, isocyanate-reactive compounds are suitable, since they are incorporated into the polymer matrix by reaction and do not generate any emissions in the foam. Examples are OH-functional compounds such as (poly)alkylene glycols, monoethylene glycol (MEG or EG), diethylene glycol (DEG), triethylene glycol (TEG), 1,2-propylene glycol (PG), dipropylene glycol (DPG), trimethylene glycol (propane-1,3-diol, PDO), tetramethylene glycol (butanediol, BDO), butyl diglycol (BDG), neopentyl glycol, 2-methylpropane-1,3-diol (Ortegol CXT) and higher homologues thereof, for example polyethylene glycol (PEG) having average molecular masses between 200 g/mol and 3000 g/mol. OH-functional compounds further include polyethers having average molecular masses of 200 g/mol to 4500 g/mol, especially 400 g/mol to 2000 g/mol, among these water-, allyl-, butyl- or nonyl-initiated polyethers, in particular those which are based on propylene oxide (PO) and/or ethylene oxide (EO) blocks.

It can be advantageous in the production of flexible PU foam to produce and/or use a composition which comprises at least one polyol component, optionally at least one isocyanate component and optionally one or more blowing agents and to react this composition.

The flexible PU foams according to embodiments of the invention can be produced by any continuous methods familiar to the person skilled in the art, for example by low-pressure or high-pressure foaming machines. The term high pressure or low pressure refers to the pressure of the raw materials dispensed into the mix head. For high pressure machines a pressure of > 40 bar is used, for low pressure machines of < 30 bar. To achieve those pressure ranges different pumps and injection devices into the mix head are utilized. In general various liquid raw material streams are pumped into the mix head. In the mix head a stirrer homogenizes the various raw materials resulting in a start of the reaction. Also gases could be added into the mix head, for example to support nucleation. The reaction mixture is afterwards leaves the mix head and is either dispensed directly on the moving process liner, which is called the liquid laydown technology or is fed into a trough from which the already creaming reaction mixture flows afterwards onto the process liner (trough or Maxfoam technology). Afterwards the reaction mixture expands in a vertical direction (in case the main movement is horizontal). Here, the foam expansion could be either to the top or to the bottom or in both directions simultaneously. For the foam expansion just to the top a flat horizontal conveyor is used. For the foam expansion to the bottom a fall plate system is used. The fall plate position resemble the rise profile of the foam and need to be precisely adjusted to avoid foam defects. This is the main task to be solved for the current invention. Once the foam reaches the full rise usually a blow-off is observed and the foam turns from a closed cell to an open cell material. This is driven by the destabilization and bursting of membranes in the polyhedron structure. The cell opening is driven by phase separation processes in the material. The foam block settles a little bit (settling) till the rapid viscosity increase due to the reaching of the gel point stabilizes the foam and turns it into a solid material no longer being able to flow. The foam block is further transported in the tunnel to complete the chemical reaction further. After several meters the tunnel ends and a saw cuts the continuously produced flexible foam into blocks. The length of those foam blocks is typically between 2 and 80 meters. The blocks are transferred into a storage rack where the hot foam blocks cool down. As the temperature is typically as high as 140°C and the material has good insulating properties this takes 1-2 days. Afterwards the foam blocks are transferred into the storage area or used in further production steps.

It is possible to various methods known to the person skilled for production of flexible PU foams. For example, the foaming operation can be executed either in the horizontal or in the vertical direction.

The compositions used in accordance with embodiments of the invention may similarly be used for CO2 technology. Use in low-pressure and high-pressure machines is possible. Raw materials to be processed being able to be metered directly into the mixing chamber or be admixed even before the mixing chamber with one of the components which then go into the mixing chamber. Admixture in the raw material tank is also possible.

Example 1 - Physical properties of the flexible PU foams: The flexible PU foams produced may be assessed according to the following physical properties a) to f):
a) Rise time: The period of time between the end of mixing of the reaction components and the blow-off of the polyurethane foam.
b) Rise height or foam height: the height of the free-risen foam formed after 3 minutes. Foam height is reported in centimeters (cm).
c) Settling of the foam at the end of the rise phase (= fallback): The settling is found from the difference of the foam height after direct blow-off and 3 minutes after foam blow-off. The foam height is measured at the maximum in the middle of the foam crest by means of a needle secured to a centimeter scale. A negative value here describes settling of the foam after blow-off; a positive value correspondingly describes further rise of the foam.
D) Number of cells per cm (cell count): This is determined visually on a cut surface (measured to DIN EN 15702).
e) Foam density (FD): Determined as described in ASTM D 3574 - 11 under Test A by measuring the core density. Foam density is reported in kg/m3.
f) Porosity determined by the flow method: In the airflow method in accordance with ASTM D 3574 (2011-00), the volume of air that flows through a defined foam specimen in a particular period of time on application of a pressure differential is determined. For this purpose, 12 test specimens having dimensions of 5 cm × 5 cm × 2.5 cm were cut out of each of the finished foams transverse to the direction of rise of the foam, and successively inserted into an analytical instrument constructed for this method. The construction of this instrument is described in ASTM D 3574 (2011-00). The analytical instrument generates an air pressure differential of 125 Pa between the inside of the instrument and the surrounding atmosphere by sucking just enough air in through the test specimen for the differential to be kept constant. The air flow through the test specimen is thus a measure of the porosity of the foam. Values in the range from 0-6.5 scfm (standard cubic feet per min) were measured, with lower values within the interval characterizing a more closed foam and higher values a more open foam.

For the sake of completeness, the measurement principle of DIN EN ISO 16000-9:2008-04 is also elucidated hereinafter.

**Table 1 - Exemplary formulation 1 for production of hot-cure flexible PU foam (flexible slabstock foam)**

| | |
|---|---|
| Formulation 1 | Parts by mass (pphp) |
| Polyol 1¹⁾ | 100 parts |
| water | 4.00 parts |
| Tin catalyst²⁾ | 0.20-0.28 part |
| TEGOAMIN^{®} DMEA³⁾ 37. | 0.15 part |
| FOAM STABILIZER 1⁴⁾ | 0.80 or 1.00 part |
| Desmodur^{®} T 80⁵⁾ | 50.0 part |
| ¹⁾ Polyol 1: Voranol^{®} CP 3322 available from Dow Chemical, this is a glycerol-based polyether polyol having an OH number of 48 mg KOH/g and predominantly secondary OH groups, average molar mass = 3500 g/mol. ²⁾ KOSMOS^{®} T9, available from Evonik Operations: tin(II) salt of 2-ethylhexanoic acid. ³⁾ DABCO^{®} DMEA: dimethylethanolamine, available from Evonik Operations. Amine catalyst for production of polyurethane foams. ⁴⁾ e. g. TEGOSTAB BF2370: silicone surfactant, available from Evonik Operations. Foam stabilizer for production of polyurethane foams. ⁵⁾ tolylene diisocyanate T 80 (80% 2,4 isomer, 20% 2,6 isomer) from Covestro, 3 mPa·s, 48% NCO, functionality 2. | |

400 g of polyol was used in each foaming operation; the other formulation constituents were recalculated accordingly. 1.00 part of a component denoted 1.00 g of this substance per 100 g of polyol for example.

The foaming was carried out by what is called manual mixing. Formulation 1 as specified in table 1 was used. To this end, a paper cup was charged with polyol, the respective amine catalyst mixture, the tin catalyst tin(II) 2-ethylhexanoate, water, foam stabilizer, and the contents were mixed at 1000 rpm for 60 seconds with a disc stirrer. After the first stirring the isocyanate (TDI) was added to the reaction mixture and stirred at 2500 rpm for 7 s and then immediately transferred into a box lined with a process liner (30 cm × 30 cm base area and 30 cm height).

The box is made from rigid foam insulation plates with 1 cm thickness. After being poured in, the foam rose up in the foaming box. In the ideal case, the foam blew off on attainment of the maximum rise height and then fell back slightly. The height of the foam is recorded while foam is rising by an ultrasonic height measurement device. To assess the properties of the resulting foam, the following characteristic parameters were determined: rise time, rise height and fallback of the foam after the end of the rise phase (= settling).

Defined foam bodies were cut out of the resulting flexible PU foam blocks and were analyzed further. The following physical properties were determined on the test specimens: cell count, porosity by the flow method, foam density (FD) and rolling deformation at room temperature.

Fig. 1 illustrates a foam production machine 100, according to an embodiment of the present disclosure. The production machine 100 includes a mixing head 102, a plurality of inclined fall plates 104a, 104b, 104c, 104d, 104e and a conveyor 106, configured to produce foam 137. The mixing head 102 is configured to mix raw materials (e.g., precursor reagents) for forming a reactive mixture 136. In one embodiment, the foam 137 is shaped as a foam block 137, and in another embodiment, the foam block is a rectangular-shaped foam block.

In one embodiment, the precursor reagents are received by the mixing head 102 via one or more transport conduits, such as hoses 108. The conduits 108 may be connected to one or more storage containers (not shown) that store the reagents under predetermined conditions, such as predetermined pressures and/or temperatures. The predetermined conditions may depend upon the types and/or proportions of reagents to be mixed together.

In one embodiment, a pour plate 110 receives the mixed reagents (i.e., the reactive mixture) from the mixing head 102. In one embodiment, the mixing head 102 is stationary as it dispenses the reactive mixture 136 onto the pour plate 110 via a nozzle 103, and the reactive mixture spreads out to form a layer having a substantially uniform height on the pour plate 110. In another embodiment, the mixing head 102 is configured to move in a laterally direction 112 as the reactive mixture is dispensed onto the pour plate 110, thereby enabling the mixture to form a layer having a substantially uniform height on the pour plate 110.

In one embodiment, a transport medium 114 positioned on the pour plate 110 receives the mixed reagents from the mixing head 102. In one embodiment, the transport medium 114 is a paper sheet, however the scope of the invention covers other mediums (e.g., impregnated paper, plastics, foils) that can be formed as thin layers or sheets to be used to receive mixed reagents. The transport medium 114 is pulled across the pour plate 110, the inclined fall plates 104, and the conveyor 106 by the motion of the conveyor 106. For example, the production machine 100 may be initialized by feeding the transport medium 114 (e.g., paper sheet) from a transport medium feed 116 across the pour plate 110 and the inclined fall plates 104 for attachment to the conveyor 106. In one embodiment, the conveyor 106 may be a conveyor belt configured for connecting with the transport medium 114, either by frictional forces or mechanically (e.g., via surface projections (not shown) of the conveyor belt, such as hooks). The conveyor belt 106 may have an adjustable speed for pulling the transport medium 114 and the reactive mixture positioned on top of the transport medium 114 at the adjustable speed. In one embodiment, the conveyor belt 106 is positioned substantially horizontal, as illustrated. As illustrated, the transport medium 114 is positioned between a bottom surface 135 of the reactive mixture 136 the inclined fall plates 104 and the conveyor 106.

In one embodiment, a first inclined fall plate 104a is configured to receive the reactive mixture from the pour plate 110 as the transport medium 114 holding the reactive mixture is pulled across the fall plates 104 by the action (i.e., motion) of the conveyor 106. Five inclined fall plates 104 are shown for ease of illustration, however the scope of the present disclosure covers any number of inclined fall plates.

In one embodiment, each inclined fall plate 104 has two ends (i.e., proximate end 118 and distal end 120). Each end of each inclined fall plate 104 is vertically adjustable. In one embodiment, each end of each inclined fall plate 104 is configured to be removably attached to inclined fall plate framework (not shown) for securing each end at a respective vertical position.

In another embodiment, each end 118, 120 is rotatably connected to a vertically-adjustable pivot axis 122 for positioning each end at a respective vertical position. When the vertical positions of two adjacent pivot axes 122 is selected, the vertical position of the two ends 118, 120 of the inclined fall plate 104 which connect to the two adjacent pivot axes 122 is also determined, and thus the slope of the inclined fall plate is determined. For example, a vertical position of a first pivot axes 122a may be set such that the proximate end 118a of the first inclined fall plate which is connected to the first pivot axis 122a 104a is level with (i.e., at the same vertical height of) the pout plate 110. Then, by setting the vertical position of the second pivot axis 122b, the slope of the first inclined fall plate 104a may be determined given a length of the first inclined fall plate 104a. The slope of the first fall plate is rise/run, which is the difference between the vertical positions of the first and second pivot axes divided by the square root of the length of the plate squared minus the difference between the vertical positions of the first and second pivot axes squared.

Although the vertical position of the first pivot axis 122a is illustrated to be coincident with the vertical position of the pour plate 110, the scope of the invention includes the vertical position of the first pivot axis 122a to be below the vertical position of the pour plate 110, thereby creating a vertical gap (or drop) between the proximate end 118a of the first incline fall plate 104a and the pour plate 110.

In one embodiment, a machine 100 having n inclined fall plates has n pivot axes, where n =5 as illustrated. The scope of the present disclosure covers any number n of inclined fall plates 104 and pivot axes 122. In the embodiment as illustrated, the ends of adjacent inclined fall plates share a pivot axis (i.e., are connected to the same pivot axis). For example, the distal end 122a of the first inclined fall plate 104a and the proximate end 118b of the second inclined fall plate 104b are rotatably connected to the vertically-adjustable second pivot axis 122b, such that no vertical gap exists between the distal end 122a of the first inclined fall plate 104a and the proximate end 118b of the second inclined fall plate.

However, the scope of the present disclosure covers embodiments that have n inclined fall plates and 2(n-1) +1 pivot axes. In this embodiment (not illustrated), the distal and proximate end of each inclined fall plate is rotatably connected to two respective vertically-adjustable pivot axes, such that a vertical gap between the distal and proximate ends of two adjacent inclined fall plates may be created by adjusting the respective pivot axes connected to the distal and proximate ends of the two adjacent inclined fall plates to have different vertical positions.

As illustrated, in one embodiment the conveyor 106 is configured to receive the reactive mixture from a last inclined fall plate 104e as the transport medium 114 holding the reactive mixture is pulled across the last inclined fall plate 104e onto the conveyor 106 by the action (i.e., motion) of the conveyor 106.

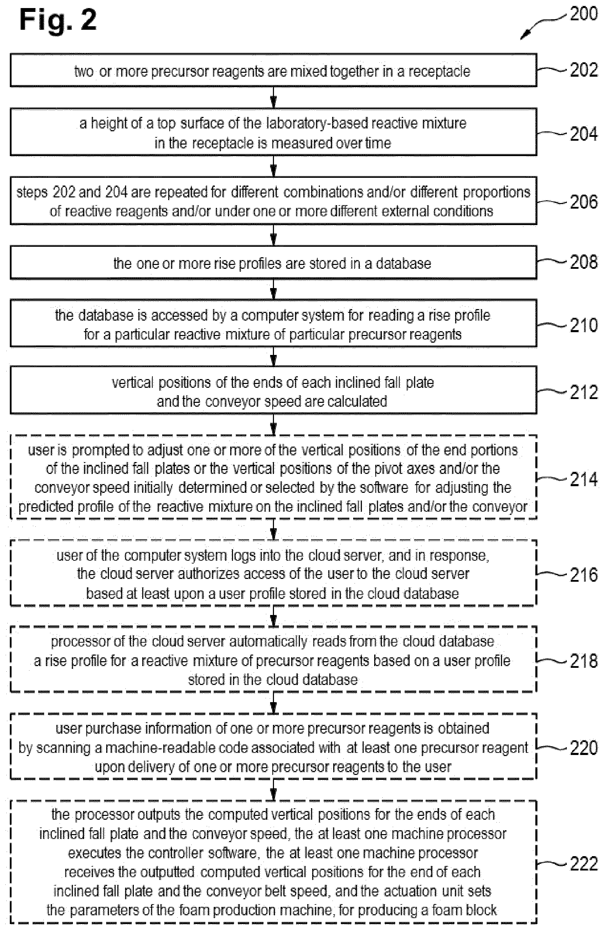

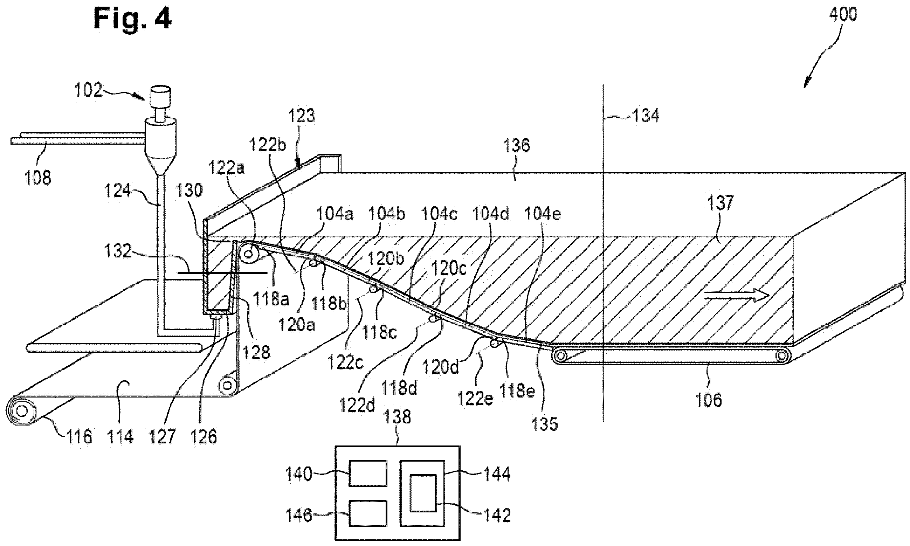

Fig. 2 illustrates a method 200 for determining machine parameters of a foam production machine, according to an embodiment of the present disclosure. The method covers machine parameters of foam production machine 100 and machine parameters of foam production machine 400. Foam production machine 400 is discussed further below in conjunction with Fig. 4.

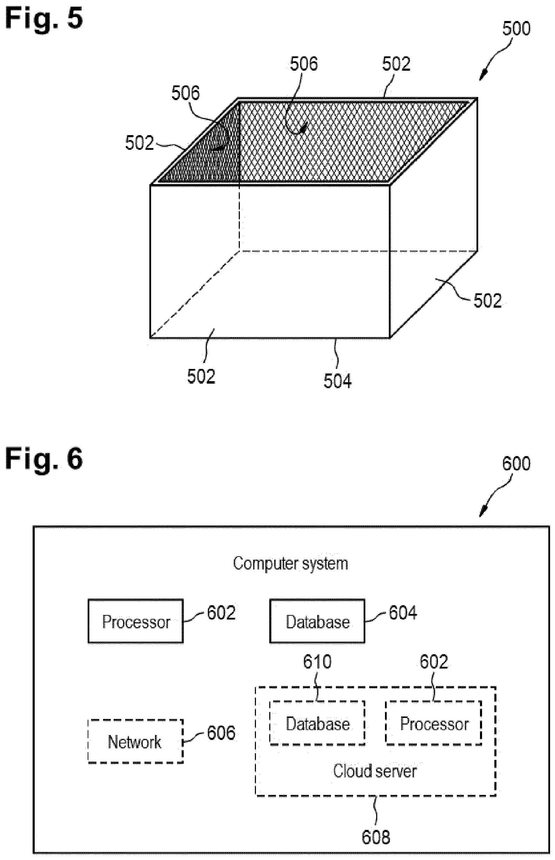

In step 202, two or more precursor reagents are mixed together in a receptacle (Fig. 5) for forming a reactive mixture, also referred to as laboratory-based reactive mixture. The receptacle is external to, and is not a component of, the foam production machine 100. In one embodiment, the precursor reagents include at least one liquid polymer and at least one catalyst. In another embodiment, the at least one liquid polymer include at least one liquid polyurethane. In other embodiments, the precursor reagents include the embodiments of the combination of reagents described above in conjunction with flexible PU foams.

In step 204, a height of a top surface of the laboratory-based reactive mixture in the receptacle is measured over time, and the height of the top surface as a function of time is defined as the rise profile. The rise profile may include pairs of height data and time data, where any given pair of data includes the measured height of the reactive mixture and the time at which the height was measured. In one embodiment, time is measured with respect to when the precursor reagents are mixed together. In another embodiment, time is measured with respect to when the creaming point (in time) is reached.

In one embodiment, the rise profile is the height of the mixture, as measured in a laboratory, as the precursor reagents react to form a foam. The height of the mixture is measured in a laboratory, at different points in time, after the reagents are mixed together. Measurements are made as the reactive mixture transforms from a liquid mixture to a turbid liquid mixture and to a foam, or in other words, as the mixture transitions through the creaming point and the blowoff point. Creaming points and blowoff points are well known to those of skill in the art and will not be discussed in further detail.

In one embodiment, the receptacle is stationary. That is, and in contrast to processing the reactive mixture by a foam production machine in which the reactive mixture is transported through the machine via action of a conveyor or other transport means, the reactive mixture is provided to a stationary receptacle that is not a component of a foam production machine, and the reactive mixture reacts to generate a foam in the stationary receptacle. In another embodiment, the movement of the reactive mixture with respect to the receptacle includes only a movement of a top surface of the mixture as the height of the top surface increases or expands upward as the mixture is converted into a foam.

In one embodiment, a laser beam is used to measure a height of a top surface of the laboratory-based reactive mixture in the receptacle at different points in time. However, examples may use methods of measuring surfaces of liquids and/or foam mixtures in receptacles as the height of the top surface increases.

In one embodiment, steps 202 and 204 include a discontinuous box foaming procedure (also referred to as a discontinuous receptacle foaming procedure, carried out in, for example, a receptacle (Fig. 5)) for measuring the rise profile of flexible foam formulations. Raw materials are stored in a climate cabinet with the temperature which is intended to be used in a real slabstock foam production. In case of different temperatures for the various raw materials in the real slabstock foam production, in the laboratory the mean temperature was used for pre-conditioning of raw materials. Afterwards raw materials were weighted into a paper cup. Just the TDI (i.e., tolylene diisocyanates) was left aside and later added shortly before the final mixing. The amount of raw materials was calculated to fill the box completely after foaming. In addition to matching temperatures of precursor reagents in the receptacle to temperatures of the same precursor reagents in the foam production machine and/or matching an ambient temperature of the receptacle to an ambient temperature of the foam production machine, other environmental conditions in the laboratory, represented by such environmental parameters as ambient pressure and ambient humidity, may also be adjusted or selected to match corresponding environmental conditions of the respective foam production machines for which machine parameters are to be determined. Matching environmental conditions include substantially matching one or more environmental parameters, which include temperature of one or more of the precursor reagents (i.e., raw materials), ambient temperature, ambient pressure and/or ambient humidity.

The mixing was done in a paper cup filled with the raw materials (TDI being added last while stopping the stirrer). After the mixing the reaction mixture was poured into the box. The box is a square box made from 1 cm thick insulating rigid polyurethane foam. The rigid foam plates are glued together on the outside to form a box by adhesive tape.

Inside the box a process liner (Fig. 5), used in large-scale continuous production of flexible slabstock foam, was used to separate the box from the liquid reaction mixture. That is, a process liner lines the inside of the box, and in commercial foam production machines, a process liner receives the reactive solution, glides over the fall plates and may extend over the sidewalls of the fall plates. The scope of the present invention covers process liners composed of any material that reduces friction between the walls of the box and the sidewalls of the fall plates. The process liner can be, for example, paper, impregnated paper, PE coated paper, etc. Impregnated paper is a sheet with excellent water absorbing and liquid retaining properties. It is typically made from wooden pulp and natural cotton linter. Materials such as plastic or latex are used to percolate the paper rather than coating it to increase its tearing resistance, wet strength, and oil resistance. Based on the type of resin, the impregnated paper market can be segmented into phenol, melamine, and urea.

According to embodiments, the process liner of the box (i.e., receptacle) is the same as the process liner (referred to as the transport medium 114) of the foam production machine of the method 200, for obtaining a high accuracy between the rise profile as measured from the discontinuous foam process in the laboratory receptacle and the true rise profile of the continuous foam process in the foam production machine. Conventional laboratory boxes used to measure properties of reactive mixtures do not use process liners. For example, in one embodiment, a chemical composition of at least a surface of the transport medium 114 of the foam production machine matches a chemical composition of at least a surface of the process liner used for generating the rise profile stored in the database, where the surfaces are those surfaces in contact with the respective reactive mixtures. The scope of the present invention also covers process liners that are integrated into the side and/or bottom panels of the laboratory receptacles, as well as side and/or bottom panels being composed of a material or composition of materials that function as a process liner. For example, at least the surfaces of the sides and/or bottom panels may be composed of process liner material, such as plastic or latex (e.g., PE), and/or paper, impregnated paper. Impregnated paper is a sheet with excellent water absorbing and liquid retaining properties. It is typically made from wooden pulp and natural cotton linter. Materials such as plastic or latex are used to percolate the paper rather than coating it to increase its tearing resistance and wet strength.

This process liner was folded and fixed by staples to fit into the box. The process liner consists of a layer of a robust and tear resistant brown paper covered by a plastic film. The plastic film prevents the penetration of liquid components into the paper and could be made from various thermoplastic polymers like polyolefins (PE, PP) or polyesters. The paper itself provides strength for the transportation of the reaction mixture and the formed foam block. The process liner may be used for commercial flexible foam slabstock production.

In one embodiment, the box has dimensions of 30 cm x 30 cm x 30 cm and is open at the top. Above the box is a height measurement device installed recording continuously the height of the reaction mixture in the box. In the procedure, the recording of the height is started once the mixed raw materials are poured into the box. The rise curve may be recorded and displayed.

In step 206, steps 202 and 204 are repeated for different combinations and/or different proportions of reactive reagents and/or under one or more different external conditions, such as different ambient temperatures and/or pressures, for creating two or more rise profiles. Each rise profile corresponds to a particular combination of reactive reagents reacting with one another under a particular set of ambient environmental conditions. In one embodiment, steps 202 and 204 are performed under environmental conditions that match environmental conditions in operating the foam production machine. For example, ambient pressures, ambient temperatures, ambient humidity and/or reactive reagent temperatures are some of the environmental parameters that may be matched.

In step 208, the one or more rise profiles are stored in a database.

In step 210, the database is accessed by a computer system 600 (Fig. 6) for reading (also referred to as importing) a rise profile for a particular reactive mixture of particular precursor reagents. In one embodiment, the computer system is a conventional computer system including at least one processor configured to execute software for reading the rise profile. According to an embodiment, a user of the computer system may define components and/or proportions of the components of a reactive mixture, as well as other parameters that effect the reactive rate of the reactive mixture, such as temperature and/or pressure under which the reaction occurs, and in response, the processor reads (or imports) the profile from the database that corresponds to the parameters defined by the user. In one embodiment, the processor, upon executing the software, queries the user for input parameters.

Alternatively, upon initial execution of the software, the computer system may authenticate the user, and upon authentication, the processor reads (or imports) a rise profile from the database based upon a user profile stored in the database. The user profile may include reagents or reactive mixtures previously used by or purchased by the user. In one embodiment, the user indicates which of the rise profiles of the rise profile associated with the user and stored in the database to import.

In step 212, vertical positions of the ends of each inclined fall plate (e.g., vertical positions for the pivot axes) and the conveyor speed (e.g., conveyor belt speed) are calculated, by the software executed by the computer system, based upon the imported rise profile, that results in a predefined predicted profile of the reactive mixture on the plurality of inclined fall plates as the reactive mixture is transported along the plurality of inclined fall plates. As discussed above in conjunction with Fig. 1, the reactive mixture may be transported along the plurality of inclined fall plates as the transport medium, upon which the reactive mixture is positioned, is transported along the plurality of inclined fall plates via action of the conveyor pulling the transport medium across the pour plate and the inclined fall plates.

In one embodiment, the software includes algorithms that selects a conveyor speed (e.g., a speed of a conveyor belt, which is equal to the speed at which the reactive mixture is transported along both the pour plate and the inclined fall plates), in a range of conventional conveyor belt speeds for foam production machines, and determines vertical positions of the ends of each inclined fall plate (e.g., vertical positions of the pivot axes which correspond to the vertical positions of the ends of each fall plate), such that the change in height of the reactive mixture on any one particular inclined fall plate over the time interval that the reactive mixture is on the particular inclined fall plate is at least partially offset by a drop in vertical height due to the slope of the particular inclined fall plate.

By way of example, if the conveyor belt speed is Vx, where x is in the horizontal direction, then the speed of the mixture in the y-direction on an inclined fall plate is the slope of the inclined fall plate multiplied by Vx. In one embodiment, the algorithm selects the vertical positions of the ends of an inclined fall plate (i.e., selects the slope of the inclined fall plate) such that the time interval that the mixture is on the inclined fall plate times the speed Vy of the mixture on the inclined fall plate is equal to the change in height of the reactive mixture during this time interval as given by the rise profile. The time that the mixture is on any particular inclined fall plate is the length of the fall plate divided by the speed of the mixture on the fall plate (i.e., sqrt(Vx2 +Vy2)). By equating the change in height of the reactive mixture during the time interval that the reactive mixture is on each of the inclined fall plates to the change of vertical height between end points of each of the respective inclined fall plates, a predefined predicted profile may be obtained for the reactive mixture across all of the inclined fall plates. In the specific embodiment discussed above, the predefined predicted profile has a substantially flat, horizontal profile (i.e., a substantially flat, horizontal top surface).

However, in some embodiments, the vertical positions of the ends of each inclined fall plate (e.g., vertical positions for the pivot axes) and the conveyor speed (e.g., conveyor belt speed) are calculated, by the software executed by the computer system, based upon the imported rise profile, that results in a predefined predicted profile of the reactive mixture on the plurality of inclined fall plates having a substantially flat, inclined top surface.

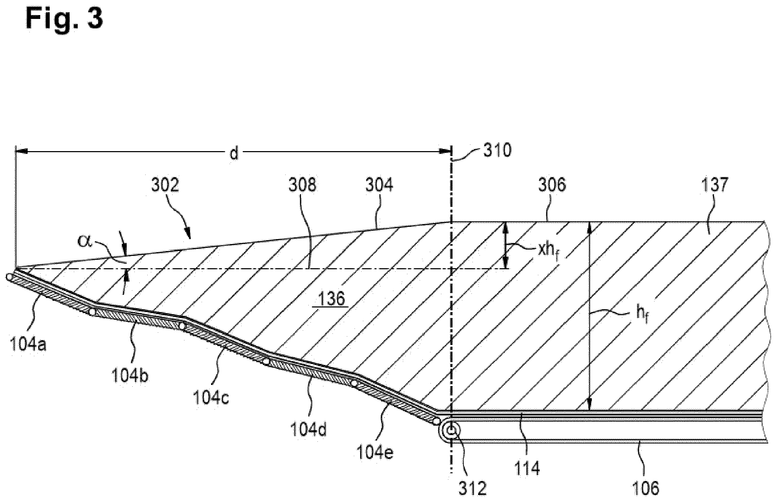

Fig. 3 illustrates a predefined predicted profile 302 of the reactive mixture on the plurality of inclined fall plates 104 having a substantially flat, inclined top surface 304, according to an embodiment of the present disclosure. As illustrated, the substantially flat top surface 304 of the reactive mixture on the plurality of inclined fall plates 104 has an inclination angle α of approximately arctan [(predefined fraction x of a height hf of the foam 137 on the conveyor) / (a horizontal length d of the plurality of inclined fall plates)] = arctan[(x · hf) / d]. In a exemplary embodiment, x is approximately 1/3, and thus x · hf is equal to approximately 1/3 the height of the foam 137 on the conveyor 106. The inventors have surprisingly discovered that using an imported rise profile for calculating the positions of the vertical positions of the ends of the inclined fall plates and the conveyor speed to give a predicted rise profile having a positive inclination angle (i.e., not zero), and more specifically, basing the positive inclination angle on the reactive mixture 136 rising approximately 30% while being transported across the plurality of inclined fall plates, results in foam 137 on the conveyor having a substantial flat (i.e., non-domed) top surface 306. The angle α is defined as the angle formed between a horizontal plane, which includes horizontal line 308, and the inclined top surface 304. A vertical plane, which includes vertical line 310, is defined to be the vertical plane that passes through end portion 120e of the inclined fall plate 104e.

In one embodiment, a user selects a conveyor speed and/or a number of inclined fall plates 104 and/or lengths of the inclined fall plates 104 and/or a positioning of the creaming line 132 (via adjustments to the pour plate 110 length dimensions and/or a size of the trough 123, described in conjunction with Fig. 3 below (e.g., trough volume) and/or position of a side surface trough lip 130 of the trough with respect to a bottom surface 126 of the trough) that results in the reactive mixture rising approximately 30% while being transported across the plurality of inclined fall plates. The vertical positions of the ends of each inclined fall plate (e.g., vertical positions for the pivot axes), given a selected conveyor speed as described above, are calculated, by the software executed by the computer system, based upon the imported rise profile, that results in the predefined predicted profile of the reactive mixture on the plurality of inclined fall plates having a substantially flat, top surface with inclination angle α.

Fig. 4 illustrates a foam production machine 400, according to another embodiment of the present disclosure. The reference numbers of foam production machine 400 having the same reference numbers of foam production machine 100 refer to similar components. As illustrated, foam production machine 400 does not include the pour plate 110 of machine 100, but instead includes a trough 123. In this embodiment, the trough has a bottom surface 126 including an input port 127 configured to receive the reactive mixture from the mixing head via a mixing head to trough conduit 124 (MTT conduit 124). The trough also includes a side surface 128 and a side surface lip 130 over which the reactive mixture 136 flows onto the proximate end 118a of the first inclined fall plate 104a.

As illustrated, and dependent upon the dimensions of the trough 123 (e.g., the volume of the trough), the rate of flow of the mixture into the trough 123 through the input port 127 and the time it takes the mixture to travel from the mixing head 102 to the trough 123 via the MTT conduit 124 (collectively referred to as mixing head/trough parameters), a creaming line 132 will be positioned somewhere within the trough 123. In one embodiment, the mixing head/trough parameters are selected to give a creaming line 132 that is located about 2/3 of the distance between the bottom surface 126 of the trough 123 and a top surface of the reactive mixture in the trough 123, which coincides with the lip 130 of the trough 123. Furthermore, in another embodiment, the conveyor speed and the number of inclined fall plates and/or a length of each inclined fall plate is selected, and in some embodiments the mixing head/trough parameters are selected, to give a blow line 134 that is located somewhere above the conveyor, as illustrated. In order to obtain foam 137 positioned on the conveyor 106 that has a predicted profile having a substantially flat surface, or a substantially flat, inclined surface, it may be important to not only select the vertical positions of the ends of each of the inclined fall plates (or the vertical positions of the pivot axes in some embodiments) and the conveyor speed based upon the imported rise profile, but to also select one or more of the number of inclined fall plates and/or a length of each fall plate, conveyor speed and/or mixing head/trough parameters to give a blow line 134 that is located somewhere above the conveyor 106 and a creaming point 132 located about 2/3 the distance between the bottom surface 126 of the trough 123 and a top surface of the reactive mixture (i.e., the vertical position of the lip 130) in the trough 123.

Referring back to Fig. 2, step 212 may additionally include calculating the vertical positions of the ends of each inclined fall plate and the conveyor belt speed, by the software executed by the computer system, based upon the imported rise profile and further based on one or more of: a vertical position of the lip 130 of the trough 123 relative to a vertical position of the proximate end 118a of the first inclined fall plate 104a and a size of the trough 123 as defined by a length between the bottom surface 126 of the trough 123 and the lip 130 of the trough 123, that results in a substantially horizontal or inclined predicted profile of the reactive mixture on the plurality of inclined fall plates 104 as the reactive mixture is transported along the plurality of inclined fall plates 104.

In optional step 214, a user is prompted to adjust one or more of the vertical positions of the end portions 118, 120 of the inclined fall plates 104 or the vertical positions of the pivot axes 122 (which correspond to the vertical positions of the respective end portions 118, 12 of the inclined fall plates 104) and/or the conveyor speed initially determined or selected by the software for adjusting the predicted profile of the reactive mixture on the inclined fall plates 104 and/or the conveyor 106. For example, if the machine settings initially determined by the software do not result in the production machine 100, 400 generating in foam 137 having a substantially flat top surface above the conveyor 106, or if the user wants to adjust the predicted profile of the mixture to have a profile not having a substantially flat top surface above the inclined fall plates in order to achieve a substantially flat top surface of foam 137 above the conveyor 106, the user may input or otherwise change one or more of the vertical positions of the end portions 118, 120 of the inclined fall plates 104 or the vertical positions of the pivot axes 122 (which correspond to the vertical positions of the respective end portions 118, 120 of the inclined fall plates 104) and/or the conveyor speed initially selected/determined by the software. Upon receiving the user input, the software computes a new predicted profile of the reactive mixture above the inclined fall plates 104 based upon the imported rise profile and the user input.

In another embodiment of the present disclosure, the computer system 600 (Fig. 6) additionally includes a network and a cloud server, where the cloud server includes at least one processor and a cloud database. In one embodiment, the processor that executes the software is a component of the cloud server. The user may have an account with the cloud server.

In optional step 216, a user of the computer system logs into the cloud sever, and in response, the cloud server authorizes access of the user to the cloud server based at least upon a user profile stored in the cloud database. The cloud server then executes the software.

In optional step 218, the processor of the cloud server automatically reads (or imports) from the cloud database a rise profile for a reactive mixture of precursor reagents based on a user profile stored in the cloud database, for example. In one embodiment, the user profile includes purchase information of at least one of the precursor reagents of the reactive mixture.

In optional step 220, user purchase information of one or more precursor reagents is obtained by scanning a machine-readable code associated with at least one precursor reagent upon delivery of one or more precursor reagents to the user. In one embodiment, and referring back to optional step 218, the processor of the cloud server automatically reads (or imports) from the cloud database the rise profile for a reactive mixture of precursor reagents based on the machine-readable code scanned in optional step 220. According to a further embodiment of the present disclosure, the foam production machine 100, 400 further includes a machine control unit 138 (see Fig. 4). The machine control unit 138 includes at least one machine processor 140, controller software 142, memory 144 configured for storing the controller software 142 and an actuator unit 146 that includes one or more actuators (not shown) for controlling the settings of the foam production machines 100, 400. For example, the one or more actuators may control (e.g., adjust or initially set) one or more of the vertical positions of the ends of each of the inclined fall plates, a rate of flow of the mixture from the mixing head 102 to the pour plate 110 or to the trough 123 and a speed of the conveyor 106. Actuators may include pneumatic or electrically controlled elements that adjust positions and speeds of components of the production machines 100, 400.

Referring back to Fig. 2, the method 200 may optionally include step 222. In optional step 222, the processor outputs the computed vertical positions for the ends of each inclined fall plate and the conveyor speed, the at least one machine processor 140 executes the controller software 142, the at least one machine processor 140 receives the outputted computed vertical positions for the end of each inclined fall plate and the conveyor belt speed, and the actuation unit 146 sets the parameters of the foam production machine 100, 400 for producing a foam block. Setting the parameters includes both initially setting the parameters of the machine 100, 400 and adjusting the parameters of the machine 100, 400 to have different values.

Fig. 5 illustrates a receptacle 500, according to an embodiment of the present disclosure. The receptacle 500 four side walls 502 and a bottom surface 504. The side walls 502 and the bottom surface 504 are covered by a process liner 506, as previously described above. Although the receptacle as illustrated is shaped as a box, the scope of the present invention includes any polygonal-shaped container, possibly having no top surface or lid. Characteristics of the receptacle 500 are previously described above. For example, the receptacle 500 may be thermally-insulating box or other polygonal-shaped container. In one embodiment, the side walls 502 and/or the bottom surface 504 are made from rigid foam insulation plates, and may have for example, a thickness of 1 cm. In another embodiment, the process liner 506 is integrated into the side walls 502 and/or the bottom surface 504.

Fig. 6 illustrates a computer system 600, according to an embodiment of the present disclosure. The computer system 600 includes at least one processor 602 and a database 604. In another embodiment, the computer system 600 additionally includes a network 606, a cloud server 608. The cloud server 608 may also include a cloud database 610. In one embodiment, the cloud server optionally includes the at least one processor 602. Computer systems, such as computer system 600, typically includes a variety of computer system readable media. Such media may be any available media that is accessible by computer systems, and it includes both volatile and non-volatile media, removable and non-removable media.

For the purposes of the description of embodiments of the present disclosure, reactive mixture 136 (Figs. 1, 3 and 4), as it is being transported along the fall plates and conveyor, is continuously being converted, via chemical reactions, from a more liquid state to a more solid state, and thus reactive mixture refers to the mixture created after the initial mixing of the precursor reagents up until the blowoff point. (also referred to as blowoff line). The mixture between these points has at least partially developed into a foam, although for the purposes of the present disclosure, the wording foam refers to the foam 137 which is on the conveyor after the blowoff line. The foam 137 is also referred to as slabstock foam.

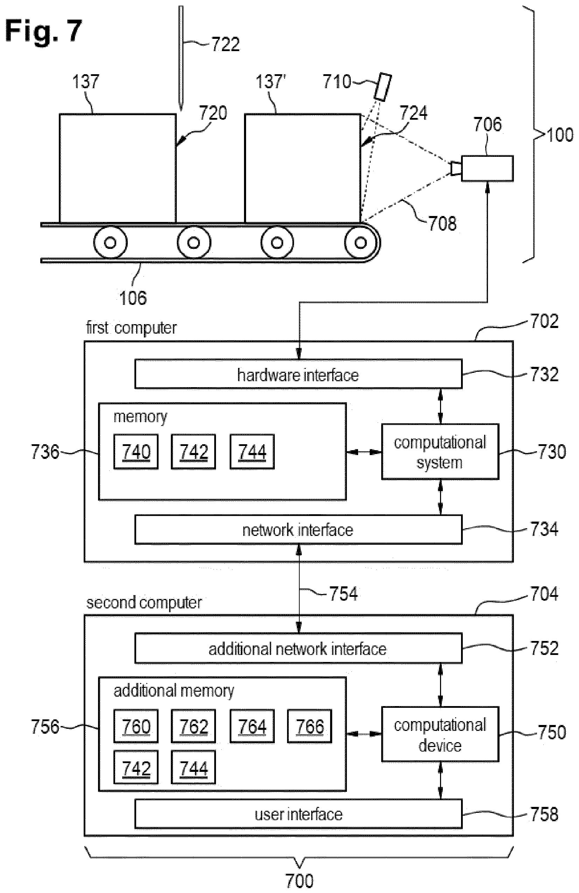

Fig. 7 illustrates an example of a system 700. The system 700 is shown as comprising a first computer 702, optionally a second computer 704, an imaging system 706 that has a field of view 708 and also optionally comprises a dark field illumination source 710. The system 700 is also shown as optionally comprising a foam production machine 100.

The conveyor 106 of the foam production machine 100 is seen as conveying a slabstock foam 137. At an end portion of the slabstock 720 is a saw 722 for cutting off foam blocks 137'. When the saw 722 cuts the slabstock foam 137 this results on a cut surface 724 of the foam block 137'. In this example the cut surface 724 is in the field of view 708 of the imaging system 706.

The first computer 702 is shown as comprising a computational system 730 that is in communication with a hardware interface 732, a network interface 734, and a memory 736. The memory 736 is shown as containing machine-executable instructions 740. The machine-executable instructions 740 enable the computational system 730 to control other components of the system 700 via the hardware interface 732. The memory 736 is further shown as containing a digital image 742 of the cut surface 724 that was acquired with the imaging system 706. The memory 736 is further shown as containing a control signal 744.

It should be noted that the components of the first computer 702 and the second computer 704 in some examples may be combined together. The second computer 704 is shown as containing a computational device 750 that is in communication with an additional network interface 752. The additional network interface 752 and the network interface 734 form a network connection 754 that enables the first computer 702 and the second computer 704 to communicate and exchange data.

The computational device 750 is further shown as being in communication with an additional memory 756 and an optional user interface 758. The user interface 758 may for example be used for such things as displaying data to an operator as well as enabling control of the computer 704, in some instances, the first computer 702. In other examples, the first computer 702 comprises the user interface 758 instead or an additional user interface.

The additional memory 756 is shown as containing additional machine-executable instructions 760. The memory 756 is shown as containing a pattern recognition module 762 and a control module 764. The memory 756 is shown as containing the digital image 742 that was received from the first computer 702 via the network interface 754. The additional memory 756 is also shown as containing the control signal 744.

The additional memory 756 is shown as containing an identification of the presence of the at least one macroscopic foam defect 766. The identification of the presence of the at least one macroscopic foam defect 766 was obtained by inputting the digital image 742 into the pattern recognition module. The control signal 744 was obtained by inputting the identification of the presence of the at least one macroscopic foam defect 766 into the control module.

The system illustrated in Fig. 7 could be interpreted as a system where the pattern recognition module 762 and the control module 764 are located remotely (such as in a cloud computing system) or at a central location. An alternative would be that the pattern recognition module 762 and the control module 764 are located at the location of the foam production machine 100.

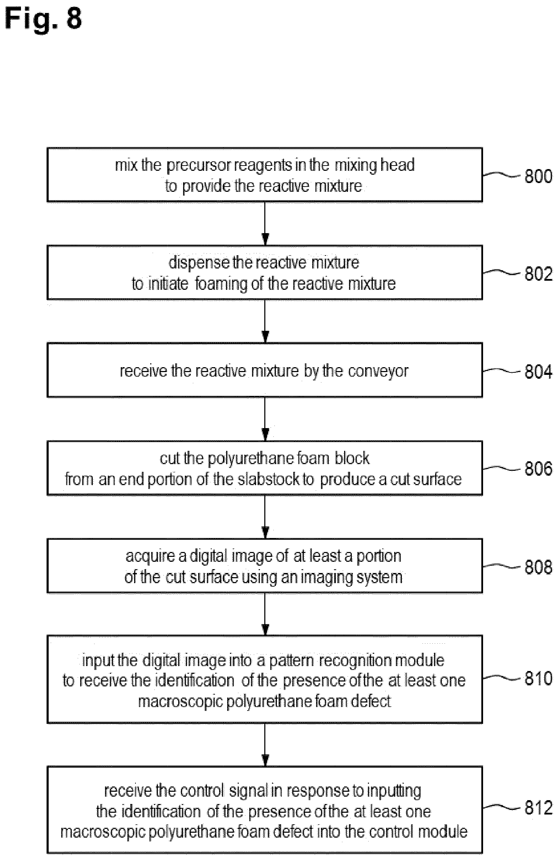

Fig. 8 shows a flowchart which illustrates a method of operating the system of Fig. 7. First, in step 800, the precursor reagents are mixed in the mixing head to provide the reactive mixture. Next, in step 802, the reactive mixture is dispensed to initiate foaming of the reactive mixture. Then, in step 804, the reactive mixture is received by the conveyor 106. Next, in step 806, the polyurethane foam block 137' is cut from the slabstock foam 137. This produces a cut surface 724. Next, in step 808, the imaging system 706 is controlled by the computational system 730 to acquire the digital image 742. Next, in step 810, the digital image 742 is input into pattern recognition module 762. In response, the pattern recognition module 762 outputs the identification of the presence of the at least one macroscopic foam defect 766. In step 812 the identification of the presence of the at least one macroscopic foam defect 766 is input into the control module 764. In response the control module 764 outputs the control signal 744. The control signal 744 that could for example be used to adjust the process parameters of the foam production machine 100.

Control loops are a common practice to ensure that set of values, referred to as set point (SP) is matched with a desired process output, referred to as process value (PV). Ideally, the error between the set point and the process value is controlled in a way, that both values remain mostly identical. Therefore, a process controller adapts the manipulated value (MV) to account for disturbances in the production process (ERR).

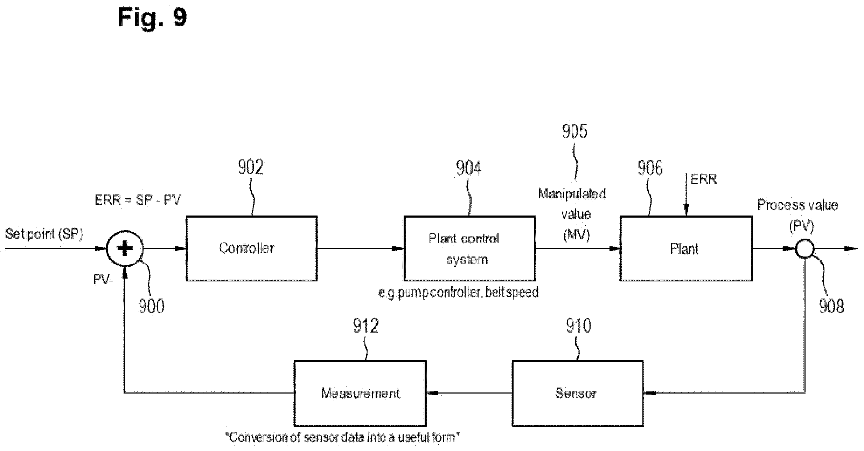

Fig. 9 illustrates an example of a closed control loop. Block 900 represents a place where a set point for a process parameter is set. This set point then determines an error, which is the difference between the set point and a process value is fed into a controller 902. The controller 902 then provides control data for a plant control system 904 to adjust various processes like the pump controller or belt speed for the foam production machine 100. The plant control system 904 then outputs a manipulated value 905 which are the actual parameters that are used to control and operate a plant 906. The plant 906 may include the foam production machine 100. From this, a process value 908 is output. To form the closed control loop a sensor 910 is used to take a measurement on the slabstock process such as performing a measurement on the foam block. In this case the sensor 910 may include the imaging system 706. The measurement may include such things as acquiring the two-dimensional image as well as measuring other things such as the height of the foam block or other physical properties. And block 912 represents the conversion of the measurement from 910 into a useful data which can be used to modify the set point 900. Block 912 may be at least partially implemented using the pattern recognition module 762 and the control module 764. This may for example include calculating derived parameters such as a foam parameter or statistical analysis of the segmentation of the cut surface.

In this case, after each in cut, the vertical foam surface (cut surface 724) is scanned with the sensor (imaging system 706). The measurement unit may detect macroscopic polyurethane foam defects, e. g. splits, pinholes and dimensional deviation in block geometry and microscopic structure, i. e. incorrect cell orientation, average cell size or homogeneity. The measurement unit may also receive the current settings of a plant control system. The controller may calculate the size of the residual ERR value. Based on a threshold, that could be proportional, as well as derivative or integrative (PID) the controller proposes or executes an adaption of the production settings. The controller has different ways of interfering.

During manufacture, a polyurethane foam block 137' may be scorched. The PU foam comprises organic materials that may oxidize due to the presence of oxygen in process. Such an oxidation may occur due to the temperature in the block of up to 120 degree Celsius. The temperature is the highest in the center of the block. Oxidation may thus occur in a center region and causes a color gradient of the material from the periphery to the center. This color gradient can be measured. If it is detected an antioxidizing agent is added to the mixture .

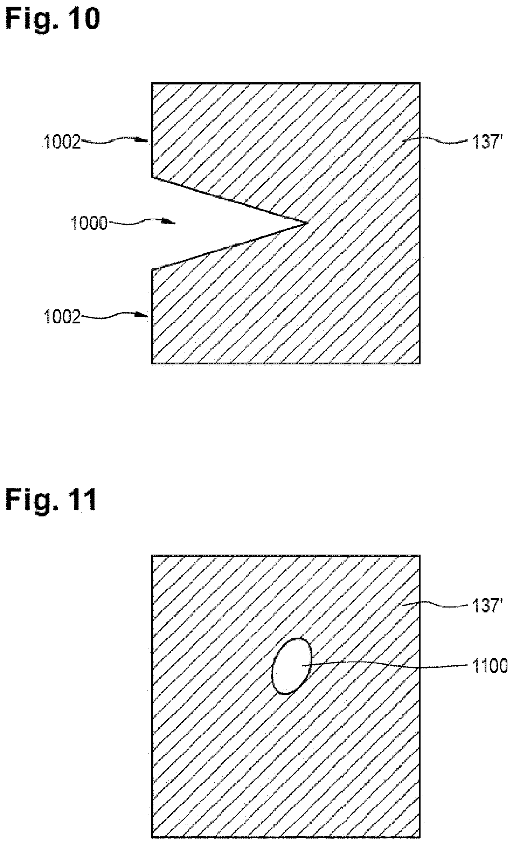

Fig. 10 illustrates and example of a split defect 1000 in a polyurethane foam block 137'. The split 1000 is a split on a surface 1002 of the polyurethane foam block 137' and extends into the interior of the polyurethane foam block 137'.

Fig. 11 illustrates a pinhole 1100 defect in the polyurethane foam block 137'. The pinhole 1100 is a region within the polyurethan foam block 137' devoid of a cell foam structure. It may form as a large bubble within the slabstock during manufacturing.

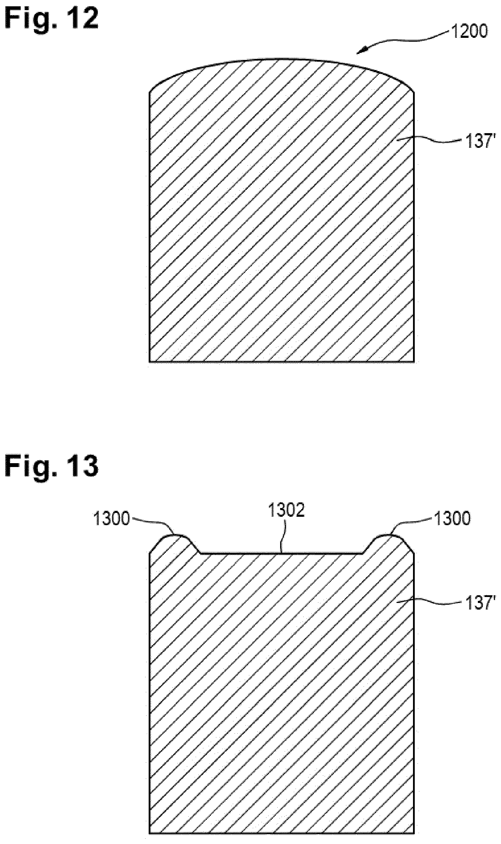

Fig. 12 illustrates a domed structure 1200 defect in the polyurethan foam block 137'. The domes structure may form , when the blow off line of the foam is far behind the last fall plate and consequently the expansion of the foam, at least partially, takes place when the fall plate system was already passed. Consequently, the fall plate system is partially ineffective and a domed structure is generated as the foam expands to the tops against the static side walls.

Fig. 13 illustrates an ear formation 1300 defect in the polyurethane foam block 137'. The ear formation 1300 forms when the blow off line is one the fall plate system. Consequently, the foam block is still moving downwards due to the influence of the fall plates, while the foam is already solidified. The complete side of the foam block, being in contact with the static side walls, is lifted upwards. Ears are generated on the top surface of the block. Some foaming machine as flat top systems, consisting of plates squeezing the top surface of the expanding foam. Typically, the plates do not cover the whole width of the foam block, but leave a 10 cm gap to each side wall. If the pressure generated by the flat top plates is too high, material is forced to flow around flat top plates, generating ears.

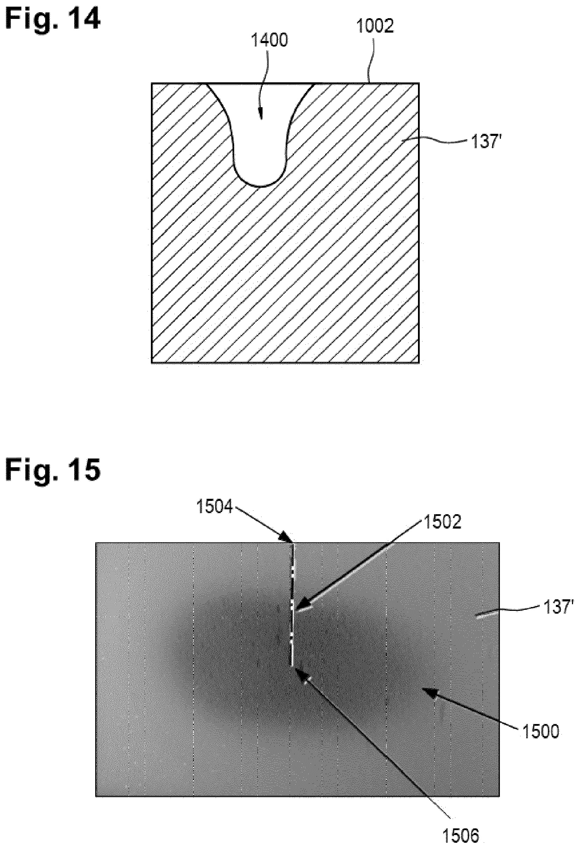

Fig. 14 illustrates an example of a blowhole 1400 defect in the polyurethane foam block 137'. A blowhole 1400 is an opening or hole in a surface 1002 of the polyurethane foam block 137' that extends into the block 137'. In this example, the blowhole 1400 is a crater or funnel shaped defecct. In other examples, the blowhole may for example connect with a pinhole.

Fig. 15 illustrates an example of a scorched foam defect 1500 in a polyurethane foam block 137'. This defect may be caused by overheating within the central region of the polyurethane foam block 137' due to an exothermic reaction during formation of the polyurethane foam. The edges of the polyurethane foam block 137' are able to cool better and show no scorching damage. The scorched foam defect may be detected by determining a color gradient from a center region 1504 of the polyurethane foam block 137' to an edge region 1506 of polyurethane foam block 137'. In this example the gradient is calculated along the dashed line 1502. If the gradient exceeds a predetermined value then an alarm signal can be provided. The gradient may be calculated in different ways. Since it is a color gradient, it may for example be the gradient of one of the colors used to specify the image (depending upon the color map used) or it may be a quantity derived from the color such as the brightness.

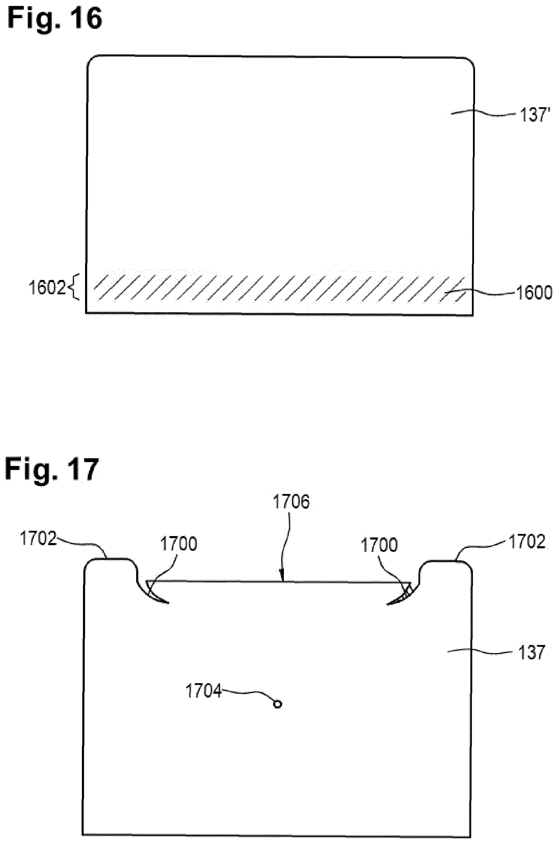

Fig. 16 illustrates and example of a densification zone 1600 in a polyurethane foam block 137'. This densification zone 1600 is horizontal and within a lower portion 1602 of the foam block (using the orientation of the foam block when it was manufactured using the slabstock process). The lower portion of the foam block may be considered to be a region within a predetermined distance of the bottom of the foam block 137'.

Fig. 17 shows a polyurethane foam block 137' that has splits 1700 that extend from a corner 1702 towards a central region 1704 of the foam block 137'. The top of the polyurethane foam block 137' has a flat surface 1706 that was over compressed by a flat top plate. This defect is related to the ear formation 1300 shown in fig. 13.

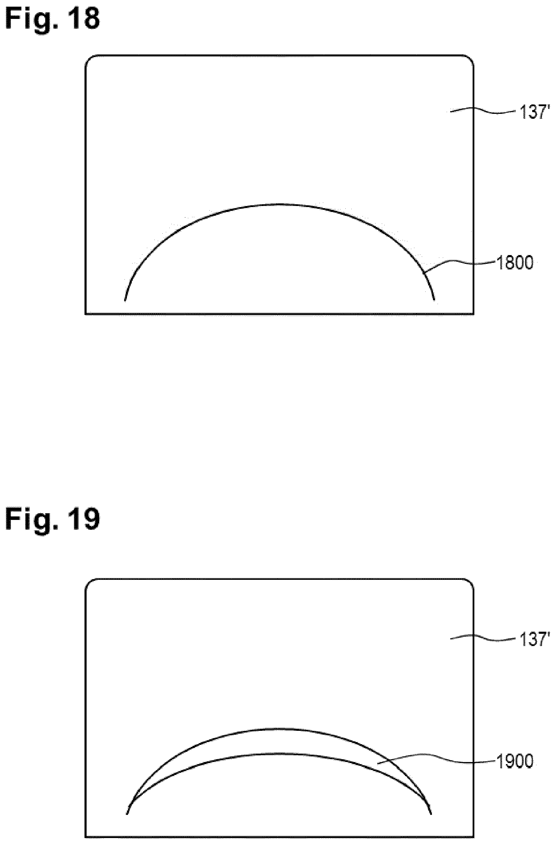

Fig. 18 illustrates an example of a half circle densification line 1800 in a polyurethane foam block 137'.

Fig. 19 illustrates an example of a half circle cavern 1900 in a polyurethane foam block 137'. The half circle cavern 1900 is related to a half circle densification line 1800. If a larger amount of gas from the reactive mixture penetrates to the half circle densification line 1800 a large bubble can form which results in the half circle cavern 1900.

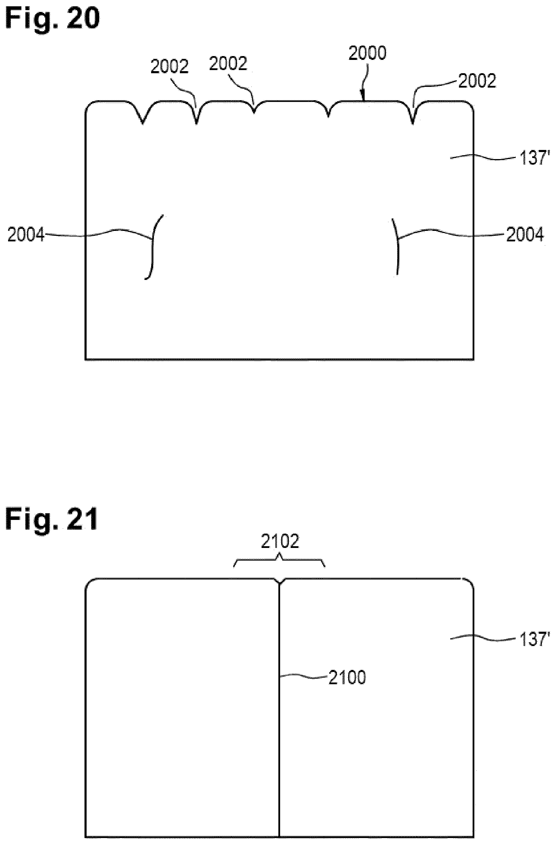

Fig. 20 illustrates two related macroscopic defects. On a top surface 2000 of the polyurethane foam block 137' there is a rough surface 2002. Additionally "s-curve" shaped splits 2004 have appeared in a central region of the foam block 137'.

Fig. 21 illustrates an example of a vertical densification line 2100 in a middle region 2102 of the foam block 137'.

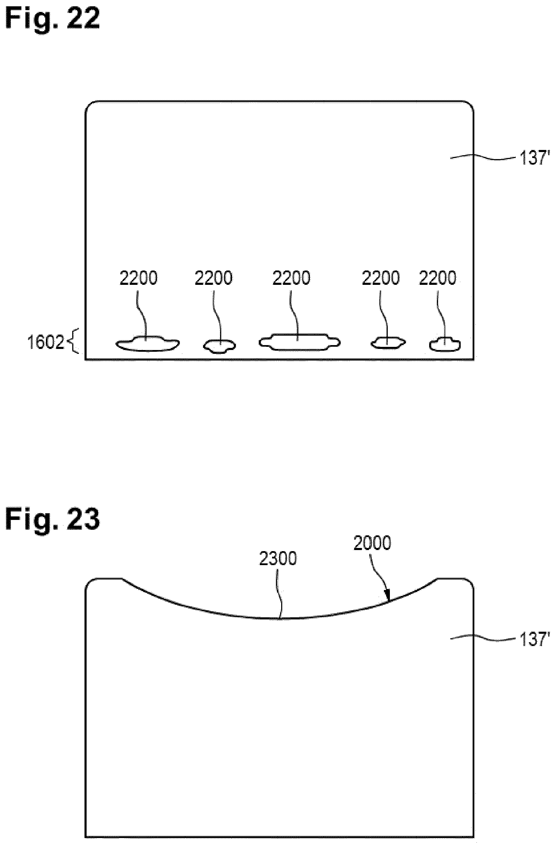

Fig. 22 illustrates gas bubbles 2200 that have formed in a lower portion 1602 of the polyurethane foam block 137'. These gas bubbles 2200 may be referred to a bottom blow-off macroscopic defect that is caused when blow-off gas is unable to escape.

Fig. 23 illustrates a depression or valley shape 2300 on a top surface 2000 of the polyurethane form block 137'. A foam block 137' like this typically has insufficient stabilization during manufacture.

### List of Reference Numerals

- 100: foam production machine
- 102: mixing head
- 103: nozzle
- 104a: inclined fall plate
- 104b: inclined fall plate
- 104c: inclined fall plate
- 104d: inclined fall plate
- 104e: inclined fall plate
- 106: conveyor
- 108: conduits
- 110: pour plate
- 112: laterally direction
- 114: transport medium
- 118: proximate end
- 120: distal end
- 122: two adjacent pivot axes
- 122a: first pivot axis
- 122b: second pivot axis
- 135: bottom surface
- 136: reactive mixture
- 137: slabstock foam
- 137': foam block
- 200: method for determining machine parameters of a foam production machine
- 202: two or more precursor reagents are mixed together in a receptacle
- 204: a height of a top surface of the laboratory-based reactive mixture in the receptacle is measured overtime
- 206: steps 202 and 204 are repeated for different combinations and/or different proportions of reactive reagents and/or under one or more different external conditions
- 208: the one or more rise profiles are stored in a database
- 210: the database is accessed by a computer system for reading a rise profile for a particular reactive mixture of particular precursor reagents
- 212: vertical positions of the ends of each inclined fall plate and the conveyor speed are calculated
- 214: user is prompted to adjust one or more of the vertical positions of the end portions of the inclined fall plates or the vertical positions of the pivot axes and/or the conveyor speed initially determined or selected by the software for adjusting the predicted profile of the reactive mixture on the inclined fall plates and/or the conveyor
- 216: user of the computer system logs into the cloud sever, and in response, the cloud server authorizes access of the user to the cloud server based at least upon a user profile stored in the cloud database.
- 218: processor of the cloud server automatically reads from the cloud database a rise profile for a reactive mixture of precursor reagents based on a user profile stored in the cloud database
- 220: user purchase information of one or more precursor reagents is obtained by scanning a machine-readable code associated with at least one precursor reagent upon delivery of one or more precursor reagents to the user.
- 222: the processor outputs the computed vertical positions for the ends of each inclined fall plate and the conveyor speed, the at least one machine processor executes the controller software, the at least one machine processor receives the outputted computed vertical positions for the end of each inclined fall plate and the conveyor belt speed, and the actuation unit sets the parameters of the foam production machine, for producing a foam block
- 302: predefined predicted profile
- 304: inclined top surface
- 306: substantial flat top surface
- 308: horizontal line
- 310: vertical line
- 400: foam production machine
- 500: receptacle
- 502: four side walls
- 504: bottom surface
- 506: process liner
- 600: computer system
- 602: at least one processor
- 604: database
- 606: network
- 608: cloud server
- 700: system
- 702: first computer
- 704: second computer
- 706: imaging system
- 708: field of view
- 710: illumination source
- 720: end portion of slabstock
- 722: saw
- 724: cut surface
- 730: computational system
- 732: hardware interface
- 734: network interface
- 736: memory
- 740: machine executable instructions
- 742: digital image
- 744: control signal
- 750: computational device
- 752: additional network interface
- 754: network connection
- 756: additional memory
- 758: user interface
- 760: additional machine executable instructions
- 762: pattern recognition module
- 764: control module
- 766: identification of the presence of the at least one macroscopic polyurethane foam defect
- 800: mix the precursor reagents in the mixing head to provide the reactive mixture
- 802: dispense the reactive mixture to initiate foaming of the reactive mixture
- 804: receive the reactive mixture by the conveyor
- 806: cut the polyurethane foam block from an end portion of the slabstock to produce a cut surface
- 808: acquire a digital image of at least a portion of the cut surface using an imaging system
- 810: input the digital image into a trained machine learning module
- 812: receive the control signal in response to inputting the digital image into the trained machine learning module
- 900: determination of set point error
- 902: controller
- 904: plant control system
- 905: manipulated value
- 906: plant
- 908: output of process value
- 910: sensor
- 912: conversion of sensor measurement into data
- 1000: split defect
- 1002: surface of polyurethane foam block
- 1100: pinhole
- 1200: domed structure or top
- 1300: ear formation
- 1302: surface in contact with flat top plate
- 1400: blowhole defect
- 1500: scorched foam defect
- 1502: gradient line
- 1504: center region
- 1506: edge region
- 1600: densification zone
- 1602: lower portion
- 1700: split
- 1702: corner
- 1704: central region
- 1706: flat surface
- 1800: half circle densification line
- 1900: half circle cavern
- 2000: top surface
- 2002: rough surface
- 2004: "s-curve" or "s-shaped split"
- 2100: vertical densification line
- 2102: middle region
- 2200: gas bubbles showing blow-off macroscopic defect
- 2300: depression or valley shape

## Claims

1. A method of producing a polyurethane foam block (137') using a foam production machine (100) configured for producing polyurethane foam as a slabstock (137) using a continuous slabstock process defined by at least one process parameter, such as a raw material output factor or a conveyor speed, the foam production machine including a mixing head (102) configured to mix precursor reagents for forming a reactive mixture (136), and a conveyor (106) configured to receive the reactive mixture, wherein the method comprises:
- mixing (800) the precursor reagents in the mixing head to provide the reactive mixture;
- dispensing (802) the reactive mixture to initiate foaming of the reactive mixture;
- receiving (804) the reactive mixture by the conveyor;
- cutting (806) the polyurethane foam block from an end portion (720) of the slabstock to produce a cut surface (724);
- acquiring (808) a digital image (742) of the cut surface using an imaging system (706);
- inputting (810) the digital image into a pattern recognition module (762), the pattern recognition module being configured to recognize at least one pattern being indicative of at least one macroscopic polyurethane foam defect, and being configured to output an identification (766) of a presence of the at least one macroscopic polyurethane foam defect in response to recognizing the respective pattern in the digital image; and
- inputting (812) the identification of the presence of the at least one macroscopic polyurethane foam defect into a control module (764), the control module being configured to process the inputted identification in order to output a control signal for changing the least one process parameter of the continuous slabstock process.

2. The method of any one of the preceding claims, wherein at least one process parameter is any item or any combination of items selected from the following list:
configuration data descriptive of a configuration of the foam block production machine, a mixing trough size, a fall plate orientation parameter, a belt or conveyor speed, a creaming position, a blowoff position, chemical process parameters descriptive of the continuous slabstock process, a formulation of the precursor reagents, mixture parameters of the reactive mixture, type of chemical compounds used, a foam catalyst concentration in the foam mixture, and a temperature of the foam mixture.

3. The method of claim 1 or 2, wherein the method is performed repeatedly.

4. The method of any one of the preceding claims, wherein the pattern recognition module and the control module are accessible via a network connection (754), wherein inputting the digital image into the pattern recognition module comprises providing the digital image to the pattern recognition module via the network connection, and wherein the control signal is received via the network connection.

5. The method of any one of the preceding claims, wherein the control module is further configured to receive any one of the following as input: the configuration data descriptive of a configuration of the foam block production machine, the chemical process parameters descriptive of the continuous slabstock process, a formulation of the precursor reagents, the mixture parameters of the reactive mixture, measured sensor data, and combinations thereof.

6. The method of any one of the preceding claims, wherein the pattern recognition module is configured for identifying the presence of the at least one macroscopic polyurethane foam defect in the digital image at least partially by:
- identifying a set of edges in the digital image using an edge detection module;
- detecting the presence of the at least one macroscopic polyurethane foam defect by mapping the set of edges to a predetermined database of macroscopic defects.

7. The method of any one of the preceding claims, wherein the pattern recognition module comprises an object detection neural network configured for outputting the identification of the at least one macroscopic polyurethane foam defect in response to receiving the digital image as input.

8. The methods of claim 7, wherein the pattern recognition module further comprises a pattern recognition algorithm, wherein the pattern recognition module is configured for outputting the identification of the at least one macroscopic polyurethane foam defect by combining results of the pattern recognition algorithm and the object detection neural network.

9. The method of any one of the preceding claims, wherein the control module comprises an algorithmic decision module configured for outputting the control signal in response to receiving the identification of the presence of the at least one macroscopic polyurethane foam defect.

10. The method of claim 9, wherein the algorithmic decision module is any one of the following: a rule-based software module and a look up table.

11. The method of any one of the preceding claims, wherein the control module comprises a decision neural network configured for outputting at least partially the control signal in response to receiving the identification of the presence of the at least one macroscopic polyurethane foam defect.

12. The method of any one of the preceding claims, wherein the at least one macroscopic polyurethan foam defect comprises a scorched foam defect (1500), wherein the method further comprises:
- determining a color gradient from a center region (1504) of the foam block to an edge region (1506) of the foam block using the digital image by the pattern recognition module;
- providing an oxidation warning as the identification of the presence of the at least one macroscopic polyurethane foam defect if the color gradient is above a predetermined color gradient threshold by the pattern recognition module; and
- providing the control signal for causing an increase of an antioxidizing agent concentration in the precursor reagents if the oxidation warning is provided.

13. The method of any one of the preceding claims, wherein the at least one macroscopic polyurethan foam defect comprises a pinhole (1100), wherein the method further comprises providing the control signal for causing a reduction of air intake into the mixer head and/or an increase in a mixing speed of the mixer head.

14. The method of any one of the preceding claims, wherein the at least one macroscopic polyurethan foam defect comprises a domed top (1200) , wherein the method further comprises providing the control signal for causing a reduction in the conveyor speed and preferably an adaptation of the raw material output factor.

15. The method of any one of the preceding claims, wherein the at least one macroscopic polyurethan foam defect comprises an uneven foam geometry like an ear formation (1300), wherein the method further comprises:
- providing, if a flat top plate is present during manufacture, the control signal for causing a reduction in the conveyor speed and preferably an adaptation of the raw material output factor; and
- providing, if a flat top is not present during manufacture, the control signal for causing pressure onto one or more fall plates to be reduced, preferably the a last fall plate in the slabstock process.

16. The method of any one of the preceding claims, wherein the at least one macroscopic polyurethan foam defect comprises a split (1700), wherein the method further comprises:
- providing, if the split is a horizontal split, the control signal for causing an increase in the conveyor speed;
- providing, if the split are preferably due to slow polymer cross linking, the control signal for causing a change in the precursor reagents, preferably an increase in a tin catalyst amount and/or an increase in a polyurethane index of the slabstock foam.

17. The method of any one of the preceding claims, wherein the at least one macroscopic polyurethan foam defect comprises a blowhole (1400), wherein the method further comprises
providing the control signal for causing an increase of silicon surfactant and/or foam stabilizer.

18. The method of any one of the preceding claims, wherein the at least one macroscopic polyurethane foam defect comprises a densification zone (1600) preferably in a lower portion (1602) of the foam block, and wherein the method further comprises providing a control signal for causing a lowering of one or more fall plate pivot points, preferably the last two pivot points of a fall plate system.

19. The method of any one of the preceding claims, wherein the at least one macroscopic polyurethane foam defect comprises a half circle densification line (1800) or a half circle cavern (1900), wherein the method further comprises providing a control signal for causing any one of the following:
- increasing a trough size;
- increasing a pour plate length;
- increasing an amine catalyst amount in the reactive mixture;
- lowering an inclination of a first fall plate;
- reducing the conveyor speed; and
- combinations thereof.

20. The method of any one of the preceding claims, wherein the at least one macroscopic polyurethane foam defect comprises a rough top block surface (2002) and/or s-shaped splits (2004) , wherein the method further comprises providing a control signal for causing any one of the following:
- reducing a trough size;
- reducing an amine catalyst amount in the reactive mixture;
- increasing the conveyor speed; and
- combinations thereof.

21. The method of any one of the preceding claims, wherein the at least one macroscopic polyurethane foam defect comprises a vertical densification line (2100), wherein the method further comprises providing a control signal for causing any one of the following:
- increasing a trough size;
- increasing an amine catalyst amount in the reactive mixture;
- reducing the conveyor speed; and
- combinations thereof.

22. The method of any one of the preceding claims, wherein the at least one macroscopic polyurethane foam defect comprises gas bubbles (2200) in a lower portion (1602) of the foam block, wherein the method further comprises providing a control signal for causing a reduction in a tin catalyst amount the reactive mixture.

23. The method of any one of the preceding claims, wherein the at least one macroscopic polyurethane foam defect comprises a depression or valley shape (2300) in a top surface (2000) of the foam block, wherein the method further comprises providing a control signal for causing an increase in a foam stabilizer amount and/or an increase in the tin catalyst in the reactive mixture

24. The method of any one of the preceding claims, wherein the at least one macroscopic polyurethane foam defect comprises splits (1700) penetrating corners (1702) of the foam block towards a central region (1704) of the foam block, wherein the method further comprises providing a control signal for causing a reduction in a foam stabilizer amount and/or a reduction in the tin catalyst in the reactive mixture

25. A foam production machine (100) configured for producing a polyurethane foam block (137') as a slabstock (137) using a continuous slabstock process defined by at least one process parameter, such as a raw material output factor or a conveyor speed, the foam production machine including a mixing head (102) configured to mix precursor reagents for forming a reactive mixture (136), and a conveyor (106) configured to receive the reactive mixture, the foam production machine further comprising a foam cutting system (722) configured for cutting a polyurethane foam block from an end portion (720) of the slabstock, wherein the foam production machine further comprises a computational system (730) and an imaging system (706), wherein the foam production machine further comprises a memory (736, 756) storing machine executable instructions (740, 760) for execution by the computational system;
wherein execution of the machine executable instructions causes the computational system to:
- control (800) the mixing head to mix the precursor reagents to provide the reactive mixture;
- control (802) the foam production machine to dispense the reactive mixture to initiate foaming of the reactive mixture;
- control (804) the conveyor to receive the reactive mixture;
- control (806) the cutting system to cut the polyurethane foam block from the end portion of the slabstock to produce a cut surface (724);
- control (808) the imaging system to acquire a digital image (742) of the cut surface using the imaging system;
- input (810) the digital image into a pattern recognition module (762), the pattern recognition module being configured to recognize at least one pattern being indicative of at least one macroscopic polyurethane foam defect, and being configured to output an identification (766) of a presence of the at least one macroscopic polyurethane foam defect in response to recognizing the respective pattern in the digital image;
- input (812) the identification of the presence of the at least one macroscopic polyurethane foam defect into a control module (764), the control module being configured to process the inputted identification in order to output a control signal for changing the least one process parameter of the continuous slabstock process.

26. A system (700) comprising a computational system (730), an imaging system (706), and a memory (736), wherein the memory stores machine executable instructions (740) for execution by the computational system; wherein execution of the machine executable instructions causes the computational system to:
- control (808) the imaging system to acquire a digital image (742) of a cut surface of a polyurethane foam block using an imaging system;
- send the digital image to a pattern recognition module (762), the pattern recognition module being configured to recognize at least one pattern being indicative of at least one macroscopic polyurethane foam defect, and being configured to output an identification of a presence of the at least one macroscopic polyurethane foam defect in response to recognizing the respective pattern in the digital image; and
- receive a control signal (744) for changing the least one process parameter of the continuous slabstock process from a control module (764), the control module being configured to process the inputted identification in order to output a control signal (744) for changing the least one process parameter of the continuous slabstock process.

27. The system of claim 26, wherein the system further comprises a computational device (750) accessible via a network connection (754), wherein the computational device comprises an additional memory (756) storing additional machine executable instructions, the pattern recognition module, and the control module; wherein execution of the additional machine executable instructions causes the computational device to:
- receive the digital image from the computational system via the network connection;
- input (810) the digital image into the pattern recognition module in order to receive the identification of the presence of the at least one macroscopic polyurethane foam defect;
- input (812) the identification of the presence of the at least one macroscopic polyurethane foam defect into the control module to receive the control signal; and
- send the control signal to the computational system via the network connection.

28. The system of claim 19 or 20, wherein the distributed system further comprises a foam production machine (100) configured for producing polyurethane foam as a slabstock (137) using a continuous slabstock process, the foam production machine including a mixing head (102) configured to mix precursor reagents for forming a reactive mixture (136), and a conveyor (106) configured to receive the reactive mixture, the foam production machine further comprising a foam cutting system (722) configured for cutting a polyurethane foam block from an end portion (720) of the slabstock, wherein execution of the machine executable instructions causes the computational system to:
- control (800) the mixing head to mix the precursor reagents to provide the reactive mixture;
- control (802) the foam production machine to dispense the reactive mixture to initiate foaming of the reactive mixture;
- control (804) the conveyor to receive the reactive mixture; and
- control (806) the cutting system to cut the polyurethane foam block from the end portion (720) of the slabstock to produce the cut surface.

29. A computer program comprising machine executable instructions (740, 760), a pattern recognition module (762), and a control module (764) for execution by a computational system (730, 750); wherein execution of the machine executable instructions causes the computational system to:
- receive (808) the digital image;
- inputting (810) the digital image into a pattern recognition module (762), the pattern recognition module being configured to recognize at least one pattern being indicative of at least one macroscopic polyurethane foam defect, and being configured to output an identification (766) of a presence of the at least one macroscopic polyurethane foam defect in response to recognizing the respective pattern in the digital image;
- inputting (812) the identification of the presence of the at least one macroscopic polyurethane foam defect into the control module, the control module being configured to process the inputted identification in order to output a control signal (744) for changing the least one process parameter of the continuous slabstock process.
